(19) Europäisches Patentamt / European Patent Office / Office européen des brevets

(11) **EP 4 614 532 A1**

(12) **EUROPEAN PATENT APPLICATION**
published in accordance with Art. 153(4) EPC

(43) Date of publication:
**10.09.2025 Bulletin 2025/37**

(21) Application number: 23885881.5

(22) Date of filing: **02.11.2023**

(51) International Patent Classification (IPC):
$H01B\ 13/00$ (2006.01)   $H01B\ 1/06$ (2006.01)
$H01B\ 1/10$ (2006.01)   $H01M\ 4/62$ (2006.01)
$H01M\ 10/0562$ (2010.01)

(52) Cooperative Patent Classification (CPC):
H01B 1/06; H01B 1/10; H01B 13/00; H01M 4/62;
H01M 10/0562

(86) International application number:
**PCT/JP2023/039731**

(87) International publication number:
**WO 2024/096127 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 04.11.2022 JP 2022177713

(71) Applicant: **University Public Corporation Osaka
Osaka-shi, Osaka 5360025 (JP)**

(72) Inventors:
• **SAKUDA, Atsushi
Sakai-shi, Osaka 599-8531 (JP)**
• **KIMURA, Takuya
Sakai-shi, Osaka 599-8531 (JP)**
• **HOTEHAMA, Chie
Sakai-shi, Osaka 599-8531 (JP)**
• **TATSUMISAGO, Masahiro
Sakai-shi, Osaka 599-8531 (JP)**
• **HAYASHI, Akitoshi
Sakai-shi, Osaka 599-8531 (JP)**

(74) Representative: **Zanoli, Enrico et al
Zanoli & Giavarini S.p.A.
Via Melchiorre Gioia, 64
20125 Milano (IT)**

(54) **METHOD FOR PRODUCING SOLID ELECTROLYTE MATERIAL HAVING ?-LI3PS4 PHASE, AND SOLID ELECTROLYTE MATERIAL**

(57)    A subject is to provide a method for manufacturing a solid electrolyte material having an $\alpha$-$Li_3PS_4$ phase. The subject is addressed by a method for manufacturing a solid electrolyte material having the $\alpha$-$Li_3PS_4$ phase, comprising heating a Li ion conductive sulfide material to a temperature within a range from 230°C to 350°C, the Li ion conductive sulfide material containing Li, P and S but free of F and Cl and having no $\alpha$-$Li_3PS_4$ phase, wherein a temperature increase rate at 200°C is 100°C/min or more.

[FIG. 3]

**Description**

TECHNICAL FIELD

The present invention relates to a method for manufacturing a solid electrolyte material having an $\alpha$-$Li_3PS_4$ phase, and a solid electrolyte material.

BACKGROUND ART

In recent years, demand for lithium-ion secondary batteries for storing electric power has been increasing in vehicles such as electric vehicles and hybrid vehicles, as well as in power generation devices such as solar cells and wind power generation. Also, from the viewpoint of ensuring safety, all-solid-state batteries that use a solid electrolyte instead of liquid in the electrolyte layer are being actively studied. These lithium-ion secondary batteries and all-solid-state batteries are required to achieve even higher performance.

As solid electrolytes for all-solid-state lithium batteries, L-P-S sulfide-based solid electrolytes have attracted attention due to their high electric conductivity, and various studies are underway. For example, Patent Literature 1 discloses an L-P-S sulfide-based solid electrolyte obtained by a mechanical milling treatment of $Li_2S$, $P_2S_5$ and LiBr. Also, crystal structures of L-P-S sulfide-based solid electrolytes are described in Patent Literatures 2 and 3.

CITATION LIST

PATENT LITERATURES

Patent Literature 1: Japan Patent Application KOKAI Publication No. 2017-095351
Patent Literature 2: Japan Patent Application KOKAI Publication No. 2017-033770
Patent Literature 3: Japan Patent Application KOKAI Publication No. 2018-174130

SUMMARY

PROBLEM TO BE SOLVED BY THE INVENTION

Among the crystal structure of an L-P-S sulfide-based solid electrolyte, an $\alpha$-$Li_3PS_4$ phase, known as a high-temperature phase, is known to have an excellent electric conductivity, but it is difficult to retain the $\alpha$-$Li_3PS_4$ phase at room temperature. Therefore, a new method for manufacturing an L-P-S sulfide-based solid electrolyte having an $\alpha$-$Li_3PS_4$ phase even at room temperature has been desired.

MEANS FOR SOLVING THE PROBLEM

The present inventors have found out that, by studying the treatment conditions according to the composition of a Li ion conductive sulfide material, it is possible to provide a solid electrolyte material having an $\alpha$-$Li_3PS_4$ phase at room temperature, thereby achieving the present invention.

Thus, in a first aspect, the present invention provides a method for manufacturing a solid electrolyte material having an $\alpha$-$Li_3PS_4$ phase, comprising heating a Li ion conductive sulfide material containing Li, P and S but free of F and Cl and having no $\alpha$-$Li_3PS_4$ phase to a temperature within a range from 230°C to 350°C, wherein a temperature increase rate at 200°C is 100°C/min or more.

In addition, the present inventors found out that, by studying the composition of the Li ion conductive sulfide material, it is possible to provide a solid electrolyte material having an $\alpha$-$Li_3PS_4$ phase at room temperature without control of the temperature increase rate, thereby achieving the present invention.

Thus, in a second aspect, the present invention provides a method for manufacturing a solid electrolyte material having an $\alpha$-$Li_3PS_4$ phase, comprising heating a Li ion conductive sulfide material containing Li, P and S as well as F and/or Cl and having no $\alpha$-$Li_3PS_4$ phase to a temperature within a range from 200°C to 300°C.

The present invention provides a solid electrolyte material containing Li, P, S and F, having a composition represented by $Li_3PS_4 \cdot aLiF$ (wherein a satisfies $0 < a \le 2.0$) and having an $\alpha$-$Li_3PS_4$ phase at room temperature.

The present invention provides a solid electrolyte material having an $\alpha$-$Li_3PS_4$ phase, obtained by the manufacturing method described above.

ADVANTAGEOUS EFFECTS OF INVENTION

The present invention provides a method for manufacturing a solid electrolyte material having an $\alpha$-Li$_3$PS$_4$ phase.

BRIEF DESCRIPTION OF THE DRAWINGS

FIG. 1 is a reference diagram of peaks in an XRD pattern containing an $\alpha$-Li$_3$PS$_4$ phase.

FIG. 2 is a diagram showing a specific volume and Li$_3$PS$_4$ phase transition in crystallization by rapid heating and rapid cooling of Li$_3$PS$_4$.

FIG. 3 is a diagram showing XRD patterns of solid electrolyte materials of Working Examples 1 to 4 and Comparative Example 2.

FIG. 4 is a diagram showing XRD patterns of solid electrolyte materials of Working Examples 5 to 11 and Comparative Examples 3 and 4.

FIG. 5 is a diagram showing XRD patterns of solid electrolyte materials of Working Examples 12 to 18 and Comparative Example 5.

FIG. 6 is a diagram showing XRD patterns of solid electrolyte materials of Comparative Examples 1 and 6 to 9.

FIG. 7 is a diagram showing XRD patterns of solid electrolyte materials of Working Examples 19 and 20 and Comparative Examples 10 and 11.

FIG. 8 is a diagram showing XRD patterns of solid electrolyte materials of Working Examples 19 and 21 to 24 and Comparative Example 6.

FIG. 9 is a diagram showing XRD patterns of solid electrolyte materials of Working Examples 25 to 28 and Comparative Examples 12 and 13.

FIG. 10 is a diagram showing XRD patterns of solid electrolyte materials of Working Examples 29 to 32 and Comparative Examples 14 and 15.

FIG. 11 is a diagram showing XRD patterns of solid electrolyte materials of Working Examples 33 to 37 and Comparative Examples 16 and 17.

FIG. 12 is a diagram showing XRD patterns of solid electrolyte materials of Working Examples 38 to 42 and Comparative Examples 6 and 17.

FIG. 13A is a diagram showing an XPS spectrum of F1S after mechanochemical treatment in each composition of LPS-F systems.

FIG. 13B is a diagram showing an XPS spectrum of F1S after heat treatment in each composition of the LPS-F systems.

FIG. 13C is a diagram showing an XPS spectrum of FKL1 after mechanochemical treatment in each composition of the LPS-F systems.

FIG. 13D is a diagram showing an XPS spectrum of FKL1 after heat treatment in each composition of the LPS-F systems.

FIG. 14 is a diagram showing Arrhenius plots of the solid electrolyte materials of Working Examples 19 and 23 and Comparative Examples 1 and 6 to 8.

FIG. 15 is a diagram showing results of TG-DTA measurements for the solid electrolyte materials of Comparative Examples 1, 6, 12, 14 and 16.

FIG. 16 is a diagram showing Raman spectra (100 to 600 cm$^{-1}$) of the solid electrolyte materials of Working Examples 28, 32, 36, and 41.

FIG. 17 is a diagram showing Raman spectra (100 to 600 cm$^{-1}$) of the solid electrolyte materials of Comparative Examples 6, 12, 14 and 16.

FIG. 18 is a diagram showing compositions and heat treatment temperature dependence of deposition phases in Li$_3$PS$_4$ and Li$_3$PS$_4$-LiF systems.

FIG. 19 is a reference diagram showing XRD patterns of crystal polymorphs of Li$_3$PS$_4$.

FIG. 20 is a diagram showing XRD patterns of the solid electrolyte material of Working Example 40 immediately after manufacture and the solid electrolyte material of Working Example 40 stored at 25°C for 500 hours after manufacture.

EMBODIMENTS OF THE INVENTION

As used herein, "x to y" (where x and y are specific values) means x or more and y or less (that is, including both end values) unless otherwise specified.

(Method for manufacturing a solid electrolyte material having an $\alpha$-Li$_3$PS$_4$ phase)

A method for manufacturing a solid electrolyte material having an $\alpha$-Li$_3$PS$_4$ phase, comprising heating a Li ion conductive sulfide material containing Li, P and S but free of F and Cl and having no $\alpha$-Li$_3$PS$_4$ phase to a temperature within a range from 230°C to 350°C, wherein a temperature increase rate at 200°C is 100°C/min or more, is provided.

In a specific embodiment, the present invention provides a method for manufacturing a solid electrolyte material having an $\alpha$-Li$_3$PS$_4$ phase, comprising heating a Li ion conductive sulfide material containing Li, P and S as well as F and/or Cl and having no $\alpha$-Li$_3$PS$_4$ phase to a temperature within a range from 200°C to 300°C.

In a specific embodiment, the present invention provides a method for manufacturing a solid electrolyte material having an $\alpha$-Li$_3$PS$_4$ phase, comprising heating a Li ion conductive sulfide material containing Li, P and S but free of F and Cl and having no $\alpha$-Li$_3$PS$_4$ phase to a temperature within a range from 230°C to 350°C, wherein a temperature increase rate at 200°C is 150°C/min or more.

In a specific embodiment, the present invention provides a method for manufacturing a solid electrolyte material having an $\alpha$-Li$_3$PS$_4$ phase, comprising heating a Li ion conductive sulfide material containing Li, P and S but free of F and Cl and being in an amorphous state to a temperature within a range from 230°C to 350°C, wherein a temperature increase rate at 200°C is 100°C/min or more.

In a specific embodiment, the present invention provides a method for manufacturing a solid electrolyte material having an $\alpha$-Li$_3$PS$_4$ phase, comprising heating a Li ion conductive sulfide material containing Li, P and S but free of F and Cl and having no $\alpha$-Li$_3$PS$_4$ phase or being in an amorphous state to a temperature within a range from 230°C to 350°C, wherein a temperature increase rate at 200°C is 100°C/min or more.

In a specific embodiment, the present invention provides a method for manufacturing a solid electrolyte material having an $\alpha$-Li$_3$PS$_4$ phase, comprising heating a Li ion conductive sulfide material containing Li, P and S but free of F and Cl and having no $\alpha$-Li$_3$PS$_4$ phase or being in an amorphous state to a temperature within a range from 230°C to 350°C, wherein a temperature increase rate at 200°C is 150°C/min or more.

In a specific embodiment, the present invention provides a method for manufacturing a solid electrolyte material having an $\alpha$-Li$_3$PS$_4$ phase, comprising heating a Li ion conductive sulfide material containing Li, P and S as well as F and/or Cl and being in an amorphous state to a temperature within a range from 200°C to 300°C.

In a specific embodiment, the present invention provides a method for manufacturing a solid electrolyte material having an $\alpha$-Li$_3$PS$_4$ phase, comprising heating a Li ion conductive sulfide material containing Li, P and S as well as F and/or Cl and having no $\alpha$-Li$_3$PS$_4$ phase or being in an amorphous state to a temperature within a range from 200°C to 300°C.

In a specific embodiment, the present invention provides a method for manufacturing a solid electrolyte material having an $\alpha$-Li$_3$PS$_4$ phase at room temperature, comprising heating a Li ion conductive sulfide material containing Li, P and S but free of F and Cl and having no $\alpha$-Li$_3$PS$_4$ phase to a temperature within a range from 230°C to 350°C, wherein a temperature increase rate at 200°C is 100°C/min or more.

In a specific embodiment, the present invention provides a method for manufacturing a solid electrolyte material having an $\alpha$-Li$_3$PS$_4$ phase at room temperature, comprising heating a Li ion conductive sulfide material containing Li, P and S as well as F and/or Cl and having no $\alpha$-Li$_3$PS$_4$ phase to a temperature within a range from 200°C to 300°C.

Hereafter, these manufacturing methods are also referred to simply as the manufacturing method.

(Li ion conductive sulfide material)

The Li ion conductive sulfide material (hereinafter referred to simply as the sulfide material) in the manufacturing method is not particularly limited as long as it is a material with Li ion conductivity, containing Li, P and S but free of F and Cl, and having no $\alpha$-Li$_3$PS$_4$ phase or a material with Li ion conductivity, containing Li, P and S as well as F and/or Cl and having no $\alpha$-Li$_3$PS$_4$ phase. Examples of materials with Li ion conductivity, containing Li, P and S but free of F and Cl, and having no $\alpha$-Li$_3$PS$_4$ phase include Li$_3$PS$_4$, Li$_4$P$_2$S$_6$, Li$_7$PS$_6$, Li$_7$P$_3$S$_{11}$ and Li$_{13}$P$_3$S$_{12}$ (having no $\alpha$-Li$_3$PS$_4$ phase). Examples of materials with Li ion conductivity, containing Li, P and S as well as F and/or Cl, and having no $\alpha$-Li$_3$PS$_4$ phase include Li$_3$PS$_4$·LiF, Li$_3$PS$_4$·0.8LiF, Li$_3$PS$_4$·0.5LiF, Li$_3$PS$_4$·0.2LiF, Li$_3$PS$_4$·0.1LiF, Li$_3$PS$_4$·LiCl, Li$_3$PS$_4$·0.8LiCl, Li$_3$PS$_4$·0.5LiCl, Li$_3$PS$_4$·0.2LiCl and Li$_3$PS$_4$·0.1LiCl. The absence of the $\alpha$-Li$_3$PS$_4$ phase in the sulfide material encompasses the fact that the sulfide material substantially does not have an $\alpha$-Li$_3$PS$_4$ phase. The absence of a substantial $\alpha$-Li$_3$PS$_4$ phase can be confirmed, for example, by the absence of a peak between $2\theta$ = 17.5° and 18.5° in an X-ray diffraction pattern of a sulfide material at room temperature (in the present specification, the room temperature refers to a temperature from 20 to 30°C) when X-ray diffraction (XRD) (using CuK$\alpha$ rays) is performed.

A material with Li ion conductivity, containing Li, P and S as well as F and/or Cl, and having no $\alpha$-Li$_3$PS$_4$ phase can be represented, for example, by the following formula (I):

$$Li_3PS_4 \cdot aLiX \qquad (I)$$

(wherein X is F and/or Cl, and a satisfies $0 \leq a \leq 2.0$).

Here, a represents a molar ratio of LiX to $Li_3PS_4$. By having a within this range, it is possible to provide a sulfide material that can improve battery performance, specifically, that have excellent ion conductivity. The range of a is not particularly limited as long as it is within the range described above, but it is preferable to satisfy $0 < a \leq 2.0$, more preferable to satisfy $0.1 \leq a \leq 2.0$, more preferable to satisfy $0.1 \leq a \leq 1.5$, and more preferable to satisfy $0.1 \leq a \leq 1.0$. X may be F, Cl or include both, but preferably includes F and is more preferably only F. By X being F, it is possible to provide a sulfide material that can improve battery performance more.

A content ratio of Li and P contained in the sulfide material is not particularly limited, but for example, a molar ratio of Li and P preferably satisfies a range (molar ratio) of Li/P = 1.0 to 10.0. By having the molar ratio of Li and P within this range, it is possible to provide a sulfide material that can improve battery performance more. It is more preferable to satisfy a range (molar ratio) of Li/P = 2.0 to 5.0, and is more preferable to satisfy a range (molar ratio) of Li/P = 2.9 to 3.1.

The sulfide material may or may not be in an amorphous state, but is preferably in an amorphous state. The sulfide material being in an amorphous state may refer to a state in which, for example, when X-ray diffraction (XRD) (using $CuK\alpha$ rays) is performed on the sulfide material, all peaks of $2\theta$ of XRD in the X-ray diffraction pattern have a width at half maximum (full width at half maximum: unit is angle) of 2.0 or more, 1.5 or more (full width at half maximum: unit is angle), 1.0 or more (full width at half maximum), 0.5 or more (full width at half maximum), or no peaks are identified. It may also refer to a state in which no clear crystallites are identified using a transmission electron microscope. The sulfide material may be obtained by mechanochemical treatment of materials thereof.

The sulfide material preferably has neither $\beta Li_3PS_4$ nor $\gamma Li_3PS_4$ phases. Whether the sulfide material has a $\beta Li_3PS_4$ or $\gamma Li_3PS_4$ phase can be confirmed by X-ray diffraction (XRD) (using $CuK\alpha$ rays) of the sulfide material at room temperature, which shows two or more independent (that is, non-overlapping) peaks between $2\theta = 17.5°$ and $18.5°$ in the X-ray diffraction pattern.

The manufacturing method may further include a process of manufacturing a sulfide material. A method for manufacturing the sulfide material is not particularly limited as long as starting materials of the sulfide material can be physically integrated. Examples of the integration methods include using a V-type mixer, mechanochemical treatment, a sand mill and a mixer (homo mixer, planetary mixer or the like). Among these, it is preferable to be subjected to mechanochemical treatment. Thus, in one specific embodiment, the manufacturing method may further include a process of manufacturing a sulfide material by mechanochemical treatment of starting materials.

A treatment device for mechanochemical treatment is not particularly limited as long as it can mix while applying mechanical energy. For example, a ball mill, a bead mill, a jet mill, a vibration mill, a disk mill, a turbo mill, mechanofusion or the like can be used. A ball mill is preferable because large mechanical energy can be obtained. Among the ball mills, a planetary ball mill is preferable because the pot rotates on its own axis and the base plate orbits in the opposite direction of its rotation, thereby efficiently generating high impact energy. Treatment conditions for mechanochemical treatment can be set appropriately according to the treatment device used.

When a planetary ball mill is used for mechanochemical treatment, the diameter of the balls is not particularly limited, but may be selected from a range of 3 to 10 mm, for example. The rotational speed may be selected from a speed of 10 to 600 rpm, for example. An output is also not particularly limited, but may be selected from conditions that result in, for example, 1 to 100 kWh/kg of starting materials. A duration of the integration treatment, for example, mechanochemical treatment, is not particularly limited, but may be set within a range from 1 to 120 hours, for example.

Starting materials for a material with Li ion conductivity, containing Li, P and S but free of F and Cl, and having no $\alpha$-$Li_3PS_4$ phase include Li, P or S alone or any combination of compounds containing one or more of Li, P or S and no F or Cl. Specific examples of such materials include $Li_2S$, $P_2S_3$, $P_2S_5$, Li, P and S. Of these, it is preferable to contain at least $Li_2S$ or $P_2S_5$, is more preferable to contain at least $Li_2S$ and $P_2S_5$, and is more preferable to contain $Li_2S$ and $P_2S_5$ to attain a molar ratio of $Li_2S$:$P_2S_5$ = 3:1.

Starting materials for a material with Li ion conductivity, containing Li, P and S as well as F and/or Cl, and having no $\alpha$-$Li_3PS_4$ phase include Li, P or S alone or any combination of compounds containing one or more of Li, P, S, F or Cl. Specific examples of such materials include $Li_2S$, $P_2S_3$, $P_2S_5$, LiF, LiCl, $PF_3$, $PF_5$, $PCl_3$, $PCl_5$, Li, P and S. Of these, it is preferable to contain at least $Li_2S$ or $P_2S_5$, is preferable to contain at least $Li_2S$ and $P_2S_5$, and is more preferable to contain $Li_2S$ and $P_2S_5$ to attain a molar ratio of $Li_2S$:$P_2S_5$ = 3:1.

The sulfide material can be in a state of powder, particles, film, layer or pellet when heating. The pellet may be obtained by pressing a sulfide material in a powder or particulate form. The layer may be a layer coating another electrode material such as an electrode active material or starting materials thereof. A pressure of pressing may be selected from pressures within a range from 50 to 2000 MPa. The coating method is not particularly limited, but a vapor phase method such as a PVD method and a CVD method, a liquid or solid phase method such as electroplating and a coating method, coating by shear force application using a milling method such as with a ball mill, or coating by spraying can be used. As the PVD method, a vacuum vapor deposition method, a sputtering method or the like can be raised. The electrode active material is not particularly limited, and for example, a positive electrode active material and a negative electrode active material to be described below can be used.

A heating method is not particularly limited. For example, using a heating medium with a temperature within a range from 200°C to 350°C or higher can be raised. By bringing the heating medium maintained at such a temperature into contact with the sulfide material, the sulfide material can be heated to a desired temperature. As a heating medium, a heating device such as an electric furnace, a hot plate, a heater, a hot press, a muffle furnace, a high-frequency induction heating device, a vacuum heating device, a rotary kiln, a sand bath and a salt bath may be used, or a gas that does not react with the sulfide material, such as argon gas, may be used. The heating medium preferably has a function of regulating temperature and time.

A heating temperature of the material with Li ion conductivity, containing Li, P and S but free of F and Cl, and having no $\alpha$-Li$_3$PS$_4$ phase is preferably within a range from 230°C to 2000°C. By the heating temperature being within this range, it is possible to provide a sulfide material that can improve battery performance more. The heating temperature is preferably within a range from 230°C to 1000°C, and is more preferably within a range from 230°C to 700°C. The heating temperature here refers to a temperature of a portion of the heating medium in contact with the sulfide material. For example, if the heating medium is a heating device, it is a surface temperature of a heated portion in contact with the sulfide material, and if it is a gas such as argon gas, it is a temperature of the gas in contact with the sulfide material. Heating may be performed only once or multiple times, but once is preferable. When performing multiple times, a heating temperature of each time is preferably within these temperature ranges.

A heating temperature of the material with Li ion conductivity, containing Li, P and S as well as F and/or Cl, and having no $\alpha$-Li$_3$PS$_4$ phase is preferably within a range from 200°C to 2000°C. By the heating temperature being within this range, it is possible to provide a sulfide material that can improve battery performance more. The heating temperature is preferably within a range from 200°C to 1000°C, and is more preferably within a range from 200°C to 500°C. Heating may be performed only once or multiple times, but once is preferable. When performing multiple times, a heating temperature of each time is preferably within these temperature ranges.

When heating is performed multiple times, for example, twice, there may or may not be a cooling process (the cooling process will be described later) between the first heating and the second heating. The second heating may be done at a higher or lower temperature than that of the first heating. For example, if heating is performed three times, the cooling process, if present, may be performed both between the first heating and the second heating and between the second heating and the third heating, or only either one of them. In a case of treating a large amount of sulfide material at one time or the like, a process of stirring and mixing the sulfide material before heating, during heating, between each heating and/or after heating may be included. A mixing method is not particularly limited as long as it can be used in this field. For example, using a V-type mixer, a sand mill or a mixer (a homo mixer, a planetary mixer or the like) can be raised.

A heating time can be set appropriately according to the sulfide material. The heating time is preferably within a range from 1 to 1200 seconds. By the heating time being within this range, it is possible to provide a sulfide material that can improve battery performance more. The heating time is preferably within a range from 1 to 600 seconds, and is more preferably within a range from 30 to 360 seconds. If the heating process is performed multiple times, the heating time can be set appropriately for each process.

The temperature of the sulfide material in the present specification refers to a temperature (actually measured value) at the surface of the sulfide material. The temperature at the surface of the sulfide material can be measured by using a radiation thermometer, for example, with thermocouples.

For a temperature increase rate of the sulfide material at a point of reaching, for example, 200°C, the temperature of the sulfide material is measured over time to obtain measured values, and based on the point of reaching 200°C (as a reference point) among the measured values, a difference between measured values at x (x is a point more than 0 and within 10 seconds where heating is maintained) seconds before and after the reference point (the value measured x seconds after the reference point - the value measured x seconds before the reference point) multiplied by 30/x can be used as the temperature increase rate of the sulfide material at the point of reaching 200°C. Alternatively, if the sulfide material is heated to 200°C or higher by a heating device that can apply a certain amount of heat, its set temperature (for example, 100°C if the sulfide material is heated at a constant rate of 100°C/minute) can be considered as the temperature increase rate of the sulfide material at the point of reaching 200°C. If a heating medium of 230°C or higher is used and there is no reason for the temperature increase rate to decrease, the temperature increase rate at 200°C can be considered to be substantially 100°C/min or more.

The temperature increase rate when heating can be set appropriately according to the sulfide material. For example, if the sulfide material is a material with Li ion conductivity, containing Li, P and S as well as F and/or Cl, and having no $\alpha$-Li$_3$PS$_4$ phase, the sulfide material is heated to a temperature within a range from 200°C to 350°C with the temperature increase rate of 100°C/min or more at the point of reaching 200°C, thereby providing the sulfide material having an $\alpha$-Li$_3$PS$_4$ phase and capable of improving battery performance. A temperature increase rate of a material with Li ion conductivity, containing Li, P and S as well as F and/or Cl, and having no $\alpha$-Li$_3$PS$_4$ phase is preferably 100°C/min to 3000°C/min, preferably 100°C/min to 1500°C/min, more preferably 100°C/min to 1000°C/min, and more preferably 150°C/min to 1000°C/min. The temperature increase rate may be at a constant rate from the start of heating and at a rate of 100°C/min or more, not only at the point of reaching 200°C. A range of the temperature increase rate in this case can be set appropriately within the temperature ranges described above.

The heating time can be adjusted appropriately in combination with the heating temperature to prevent the temperature of the sulfide material from becoming excessively high. For example, if the heating temperature is higher than 500°C, the heating time would be shortened (for example, within 60 seconds) so as to prevent the formation of a crystal phase that is not an $\alpha$-Li$_3$PS$_4$ phase, such as a $\beta$-Li$_3$PS$_4$ phase, due to the temperature of the sulfide material becoming too high. The formation of a crystal phase that is not an $\alpha$-Li$_3$PS$_4$ phase can be confirmed by appearances of two or more independent peaks between $2\theta = 17.5°$ and 18.5° in an X-ray diffraction pattern in X-ray diffraction using CuK$\alpha$ rays.

As a combination of heating temperature and heating time, a heating temperature within a range from 300°C to 500°C with a heating time within a range from 10 to 360 seconds is preferable. This combination of heating temperature and heating time can provide a sulfide material that can improve battery performance more.

If the sulfide material is in an amorphous state, the temperature of the sulfide material is preferably heated to a temperature above a glass transition temperature of the sulfide material at least one time or more. By the sulfide material being heated to a temperature above the glass transition temperature, it is possible to provide a sulfide material that can improve battery performance more. Since the glass transition temperature differs depending on the composition of the sulfide material, the heating temperature is adjusted according to the composition of the sulfide material. The temperature of the sulfide material may be heated to, for example, 5°C or higher, 10°C or higher, 20°C or higher, 30°C or higher, or 50°C or higher than the glass transition temperature of the sulfide material.

The temperature of the sulfide material is preferably heated to a temperature above a crystallization temperature of the sulfide material at least one time or more. By the sulfide material being heated to a temperature above the crystallization temperature, it is possible to provide a sulfide material that can improve battery performance more. Since the crystallization temperature differs depending on the composition of the sulfide material, the heating temperature is adjusted according to the composition of the sulfide material. The temperature of the sulfide material may be heated to, for example, 5°C or higher, 30°C or higher, or 50°C or higher than the crystallization temperature of the sulfide material.

The glass transition temperature and the crystallization temperature of the sulfide material can be measured, for example, by thermogravimetric differential thermal analysis (TG-DTA) or the like.

After the heat treatment described above, the sulfide material may be maintained at a temperature within the ranges described above for a certain period of time. The time maintained is not particularly limited, but can be within a range from 1 to 1000 seconds, 1 to 800 seconds, or 1 to 600 seconds, for example.

A solid electrolyte material having an $\alpha$-Li$_3$PS$_4$ phase can be manufactured by adjusting the heating temperature, heating time, temperature increase time, and temperature maintenance time appropriately.

The manufacturing method may further include a process of cooling the material after heating. The cooling method is not particularly limited and may be done by natural cooling or by using any cooling device, while cooling by a cooling device is preferable. As a cooling device, for example, a liquid quench coagulation device, a quench flake production device, an in-liquid spinning device, a gas atomization device, a water atomization device, a rotating disk device or the like can be used. A cooling medium that does not react with the sulfide material, such as liquid nitrogen, may also be used.

A temperature decrease rate during cooling is not particularly limited and can be set appropriately. The temperature decrease rate may be, for example, 10°C/min to 60000°C/min, 50°C/min to 12000°C/min, or 100°C/min to 6000°C/min. The cooling may be done at a temperature decrease rate of 50°C/min or less or 50°C/min or more, and cooling at a rate of 100°C/min or more is preferable.

In a specific embodiment, the present invention provides a method for manufacturing a solid electrolyte material having an $\alpha$-Li$_3$PS$_4$ phase, comprising heating a Li ion conductive sulfide material containing Li, P and S but free of F and Cl and having no $\alpha$-Li$_3$PS$_4$ phase to a temperature within a range from 230°C to 350°C, wherein a temperature increase rate at 200°C is 100°C/min or more and a process of cooling the Li ion conductive sulfide material after heating.

In a specific embodiment, the present invention provides a method comprising heating a Li ion conductive sulfide material containing Li, P and S as well as F and/or Cl and having no $\alpha$-Li$_3$PS$_4$ phase to a temperature within a range from 200°C to 300°C and a process of cooling the Li ion conductive sulfide material after heating.

Each treatment process is preferably performed under an inert atmosphere (for example, under an argon atmosphere) using a glove box or the like in an environment with a moisture concentration of 10000 ppm or less and an oxygen concentration of 10000 ppm or less, and is more preferably performed in an environment with a moisture concentration of 1000 ppm or less and an oxygen concentration of 1000 ppm or less.

Each treatment process may be performed under a pressure lower or higher than a normal pressure. The normal pressure refers to, for example, a range of $\pm 200$ hPa of 1013 hPa. In addition, the pressure conditions may be varied, such as gradually pressurizing, gradually reducing the pressure, or using the normal pressure during heating but pressurizing during cooling.

Whether the manufactured solid electrolyte material has an $\alpha$-Li$_3$PS$_4$ phase or not can be confirmed by, for example, observing a peculiar combination of peaks in an X-ray diffraction pattern using CuK$\alpha$ rays, which a person skilled in the art determines to have an $\alpha$-Li$_3$PS$_4$ phase (for the X-ray diffraction pattern of the $\alpha$-Li$_3$PS$_4$ phase, see, for example,

EP 4 614 532 A1

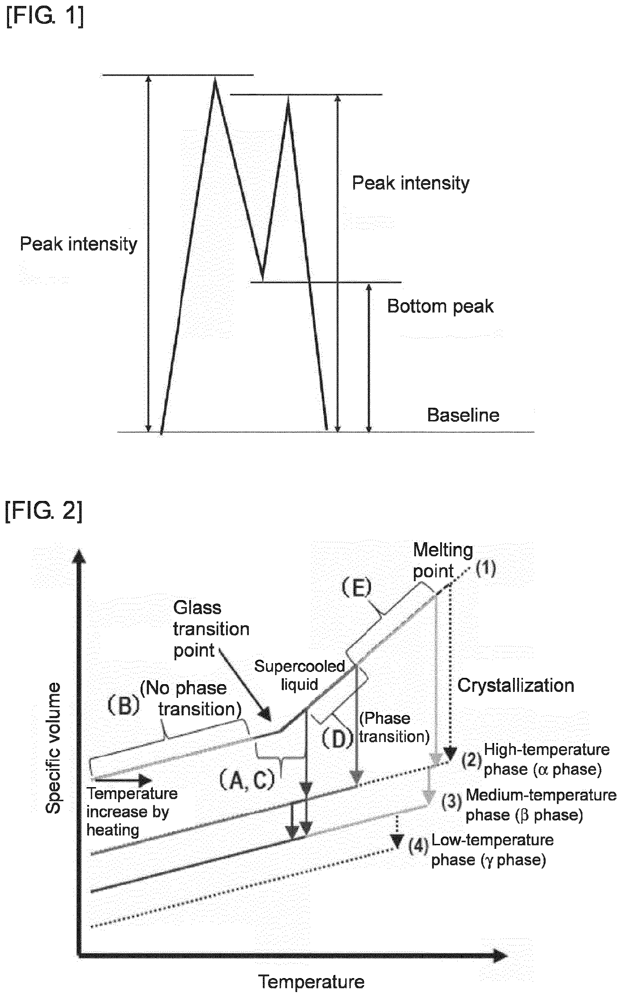

Japan Patent Application KOKAI Publication No. 2017-033770 (Patent Literature 2)). Alternatively, it can be confirmed by an appearance of only one unimodal peak between $2\theta = 17.5°$ and $18.5°$ as a peak in the X-ray diffraction pattern using $CuK\alpha$ rays. Alternatively, if the X-ray diffraction pattern using smoothed and background-processed $CuK\alpha$ rays has two partially overlapping peaks between $2\theta = 17.5°$ and $18.5°$ and a peak intensity (with respect to a baseline) of the lowest peak intensity (a bottom peak intensity) between the two peaks is 10% or more of the peak intensity (with respect to the baseline) of either of the two peaks, it can also be determined that the manufactured solid electrolyte material has an $\alpha$-$Li_3PS_4$ phase (see FIG. 1). The bottom peak intensity is preferably 40% or more and more preferably 90% or more of the peak intensity of either of the two peaks. The smoothing, background processing, and baseline calculation of the X-ray diffraction pattern can be performed using commercially available analysis software (for example, SmartLab Studio II manufactured by Rigaku Corporation).

The manufactured solid electrolyte material may have a lattice constant of a-axis = 8.707 Å, b-axis = 8. 766 Å and c-axis = 8. 310 Å ($\alpha = \beta = \gamma = 90°$) as calculated by fitting the X-ray diffraction pattern of the solid electrolyte material measured using $CuK\alpha$ rays at room temperature with a crystal structure analysis software with a rectangular crystal and space group as Pbcn.

A solid electrolyte material having an $\alpha$-$Li_3PS_4$ phase (at room temperature) can be obtained by the method for manufacturing a solid electrolyte material of the present invention. The inventors' ideas on why it is possible to obtain the solid electrolyte material having an $\alpha$-$Li_3PS_4$ phase (at room temperature) are described here.

The crystal phases of $Li_3PS_4$ include an $\alpha$-$Li_3PS_4$ phase (high-temperature phase), a $\beta$-$Li_3PS_4$ phase (medium-temperature phase) and a $\gamma$-$Li_3PS_4$ phase (low-temperature phase). The $\alpha$-$Li_3PS_4$ phase usually appears when amorphous $Li_3PS_4$ is heat-treated to a high temperature of nearly 500°C. After that, when the heating is terminated and the temperature is reduced to a room temperature, the $\alpha$-$Li_3PS_4$ phase then undergoes a phase transition to the $\gamma$-$Li_3PS_4$ phase. The $\beta$-$Li_3PS_4$ phase is deposited when $Li_3PS_4$ is gently heated to about 230°C and the temperature is maintained. Here, if the temperature of the heated $Li_3PS_4$ is lowered to the room temperature, the crystal phase is maintained in the $\beta$-$Li_3PS_4$ phase. Thus, the $\alpha$-$Li_3PS_4$ phase is usually not present as a crystal phase at room temperature. Here, the inventors have found out that, by heating (amorphous) $Li_3PS_4$ at a controlled temperature increase rate of at least 100°C/min or more at 200°C, the $\alpha$-$Li_3PS_4$ phase appears even at a temperature of about 250°C, and that the $\alpha$-$Li_3PS_4$ phase is maintained even when the temperature is returned to room temperature from this state and does not transition to the $\gamma$-$Li_3PS_4$ phase. Such a matter has not been known before.

FIG. 2 shows relationships between the temperature increase rates and reaching temperatures as well as final phases formed, as assumed by the inventors. The horizontal axis in FIG. 2 shows the temperature, and the vertical axis shows a change in specific volume versus temperature. (1) in FIG. 2 shows a Li ion conductive sulfide material heated to a temperature of the glass transition point or even higher. (2) to (4) in FIG. 2 show crystal phases formed from the heated Li ion conductive sulfide material, respectively. Arrows in FIG. 2 indicate that phase transitions are taking place.

When the temperature increase rate at 200°C is slower than 100°C/min, the heat treatment deposits the $\beta$-$Li_3PS_4$ phase that is a medium-temperature phase ((A) in FIG. 2). The inventors believe that this is because, when the temperature increase rate is slow, nucleation and growth of the $\beta$-$Li_3PS_4$ phase are faster than formation of the $\alpha$-$Li_3PS_4$ phase in a supercooled liquid due to a difference in temperature dependence of a crystal nucleation rate between the $\alpha$-$Li_3PS_4$ and $\beta$-$Li_3PS_4$ phases, and an embryo (young nucleus) of the $\alpha$-$Li_3PS_4$ phase formed in the supercooled liquid dissolves and eventually disappears.

If the temperature increase rate at 200°C is faster than 100°C/min, the crystal phase formed by the heated Li ion conductive sulfide material changes depending on the temperature reached by the heating (reaching temperature). For example, the reaching temperature is low (230°C or lower), or no crystal phase is formed ((B) in FIG. 2) or the $\beta$-$Li_3PS_4$ phase is deposited ((C) in FIG. 2). The inventors consider that this is because the reaching temperature is either too low for a crystal nucleus to form or only formation and growth of a crystal nucleus of the $\beta$-$Li_3PS_4$ phase occur. In a case of higher reaching temperatures (350°C or higher) as well, the $\beta$-$Li_3PS_4$ phase is deposited ((C) in FIG. 2). The inventors consider that this is because the Li ion conductive sulfide material that has finished heating passes through a temperature range where the phase transition from the $\alpha$-$Li_3PS_4$ phase to the $\beta$-$Li_3PS_4$ phase can occur as it returns to room temperature and the phase transition from the $\alpha$-$Li_3PS_4$ phase to the $\beta$-$Li_3PS_4$ phase is taking place. When the reaching temperature is within a range from 230°C to 350°C, the $\alpha$-$Li_3PS_4$ phase is formed ((D) in FIG. 2). The inventors consider that this is because the $\alpha$-$Li_3PS_4$ phase is deposited because formation and growth of the $\alpha$-$Li_3PS_4$ phase are faster than nucleation of the $\beta$-$Li_3PS_4$ phase in the supercooled liquid, and because the Li ion conductive sulfide material that has finished heating does not pass through a temperature range where the phase transition from the $\alpha$-$Li_3PS_4$ phase to the $\beta$-$Li_3PS_4$ phase can occur when it returns to room temperature.

It has also been found that for a solid electrolyte material further containing F or Cl in $Li_3PS_4$, by heating the material to a temperature within a range from 200°C to 300°C, the $\alpha$-$Li_3PS_4$ phase appears without control of the temperature increase rate and is also maintained at room temperature. Such a matter also has not been known before.

In this way, a solid electrolyte material having an $\alpha$-$Li_3PS_4$ phase at room temperature can be obtained by the method for manufacturing a solid electrolyte material of the present invention. In the solid electrolyte material having an $\alpha$-

$Li_3PS_4$ phase at room temperature obtained by the method for manufacturing a solid electrolyte material of the present invention, the $\alpha$-$Li_3PS_4$ phase is retained stably without loss over time after manufacture. Therefore, the solid electrolyte material that can retain its excellent conductivity for a long period of time due to the presence of the $\alpha$-$Li_3PS_4$ phase can be obtained by the method for manufacturing a solid electrolyte material of the present invention.

(Solid electrolyte material)

The present invention provides a solid electrolyte material containing Li, P, S and F, having a composition represented by $Li_3PS_4 \cdot aLiF$ (wherein a satisfies $0 < a \leq 2.0$) and having an $\alpha$-$Li_3PS_4$ phase at room temperature.

In addition, the present invention provides a solid electrolyte material containing Li, P, S and F, having a composition represented by $Li_3PS_4 \cdot aLiF$ (wherein a satisfies $0 < a \leq 2.0$) and having an $\alpha$-$Li_3PS_4$ phase.

In a specific embodiment, the present invention also provides a solid electrolyte material containing Li, P, S and F, having a composition represented by $Li_3PS_4 \cdot aLiF$ (wherein a satisfies $0 < a \leq 2.0$) and having an $\alpha$-$Li_3PS_4$ phase at room temperature (except for a composition represented by the following formula (II):

$$Li_{4-4\beta-\alpha-\gamma}P_{1+\beta}S_{4-\gamma}F_\gamma \qquad (II)$$

[wherein $0.2 \leq \alpha < 1.0$, $0 \leq \beta \leq 0.075$, $0 < \gamma \leq 0.2$]).

Although a range of a of the solid electrolyte material is not particularly limited, but by having a within the range of $0 < a \leq 2.0$, it is possible to provide a sulfide material that can improve battery performance, specifically, that have excellent ion conductivity. The range of a may be $0 < a \leq 1.5$, $0 < a \leq 1.0$, or $0.1 \leq a \leq 1.0$.

As $Li_3PS_4 \cdot aLiF$, for example, $Li_3PS_4 \cdot 0.01LiF$, $Li_3PS_4 \cdot 0.05LiF$, $Li_3PS_4 \cdot 0.1LiF$, $Li_3PS_4 \cdot 0.2LiF$, $Li_3PS_4 \cdot 0.3LiF$, $Li_3PS_4 \cdot 0.4LiF$, $Li_3PS_4 \cdot 0.5LiF$, $Li_3PS_4 \cdot 0.6LiF$, $Li_3PS_4 \cdot 0.7LiF$, $Li_3PS_4 \cdot 0.8LiF$, $Li_3PS_4 \cdot 0.9LiF$, $Li_3PS_4 \cdot LiF$, $Li_3PS_4 \cdot 1.5LiF$ and $Li_3PS_4 \cdot 2.0LiF$ can be raised.

A reason for the presence of the $\alpha$-$Li_3PS_4$ phase at room temperature is as discussed above.

The solid electrolyte material preferably does not have a $P_2S_6^{4-}$ derived peak observed at 370 to 400 $cm^{-1}$ in a Raman spectrum. The Raman spectrum can be measured, for example, using a laser Raman spectrometer LabRAM HR-800, with a green laser (532 nm) as an oscillation line.

The solid electrolyte material can be manufactured by physically integrating starting materials such as $Li_2S$, $P_2S_5$ and LiF, for example, and mechanochemical treatment is preferable as an integration method. The integration method and the mechanochemical treatment are as described above.

The inventors consider that, in a solid electrolyte material represented by a Li ion conductive sulfide electrolyte material [for example, $Li_3PS_4 \cdot aLiF$ (wherein a satisfies $0 < a \leq 2.0$) described above] obtained by a method comprising heating a Li ion conductive sulfide material containing Li, P and S as well as F and/or Cl and having no $\alpha$-$Li_3PS_4$ phase to a temperature within a range from 200°C to 300°C, F and Cl are present in the solid electrolyte material in the form of LiF and LiCl, respectively, but it is unclear in what state these LiF and LiCl are present in the solid electrolyte material. That is, the inventors consider that manufacturing a Li ion conductive solid electrolyte material having an $\alpha$-$Li_3PS_4$ phase (at room temperature) without being limited by the temperature increase rate can be achieved by heating with a Li ion conductive sulfide material containing F and/or Cl, but it is unclear in what state this F or Cl is, and it is difficult to specifically identify its state.

(Solid electrolyte composite)

The present invention provides a solid electrolyte composite containing the solid electrolyte material of the present invention.

In addition to the solid electrolyte material of the present invention, the solid electrolyte composite may be mixed with a solid electrolyte other than the solid electrolyte material of the present invention, a binding material, a conductive material and the like.

A percentage of the solid electrolyte material of the present invention in the solid electrolyte composite can be, for example, 50 mass% or more, 70 mass% or more, or 95 mass% or more.

As a binding material, there is no particular limitation, and any material that can be used normally for battery materials can be used. The binding material may be one type of binding material or a combination of a plurality of binding materials.

A range of content of the binding material in the solid electrolyte composite can be appropriately selected from a range of 0 to 40 mass%. Of these, 30 mass% or less is preferable, 10 mass% or less is more preferable, and containing no binding material is more preferable.

As a conductive material, there is no particular limitation, and any material that can be used normally for battery materials can be used. The conductive material may be one type of conductive material or a combination of a plurality of conductive materials.

A range of content of the conductive material in the solid electrolyte composite can be appropriately selected from a range of 0 to 40 mass%. Of these, 30 mass% or less is preferable, and 20 mass% or less is more preferable.

As a solid electrolyte other than the solid electrolyte material of the present invention contained in the solid electrolyte composite, there is no particular limitation, and any electrolyte that can be used normally for battery materials can be used. The solid electrolyte other than the solid electrolyte material of the present invention may be glass or glass ceramic.

Glass ceramic is a material having a glass phase and a (deposited) crystal phase dispersed in the glass phase. The glass ceramic can be formed, for example, by heating a glass phase at a temperature of its glass transition point or higher to crystallize (at least a portion of) the material. The glass transition point can be measured, for example, by differential thermal analysis (DTA).

The fact that the solid electrolyte material is glass ceramic can be confirmed, for example, by using a transmission electron microscope (TEM) to observe that a plurality of crystal phases are contained in the glass phase.

A range of content of a solid electrolyte other than the solid electrolyte material of the present invention contained in the solid electrolyte composite can be appropriately selected from a range of 0 to 50 mass%. Of these, 40 mass% or less is more preferable, and 30 mass% or less is more preferable.

A sum of contents of the binding material, conductive material and solid electrolyte in the solid electrolyte composite is not particularly limited, but 60 mass% or less is preferable, 50 mass% or less is more preferable, 40 mass% or less is more preferable, and 30 mass% or less is more preferable.

The solid electrolyte composite can be formed by mixing the solid electrolyte material of the present invention with a solid electrolyte other than the solid electrolyte material of the present invention, a binding material, a conductive material and the like. A mixing method is not particularly limited as long as it can be used in this field.

The solid electrolyte composite and the solid electrolyte material of the present invention can be made into a solid electrolyte layer by pressing them to a predetermined thickness, for example. A pressure of the pressing may be selected from pressures within a range from 50 to 2000 MPa.

(Electrode)

An embodiment of the present invention provides an electrode containing the solid electrolyte material of the present invention. The electrode may be a positive electrode or a negative electrode. An amount of the solid electrolyte material of the present invention contained in the electrode is not particularly limited, but can be within a range from 1 to 50 mass%, for example.

The electrode may contain a positive electrode active material and a negative electrode active material commonly used in this field, as well as the binding material, the conductive material and the solid electrolyte other than the solid electrolyte material of the present invention as described above.

The electrode can be obtained in a pellet form or in a sheet form by, for example, mixing an electrode active material and optionally a binding material, a conductive material or an electrolyte and pressing the obtained mixture.

(Electrode composite)

The present invention also provides an electrode composite in which the electrode of the present invention and a current collector are combined.

As a current collector, a material, a shape and the like are not particularly limited as long as it can be combined with the electrode of the present invention and can fulfill a function as a current collector. The shape of the current collector may be a uniform alloy plate or a perforated shape. It may also be in a foil, sheet, or film form.

As a material of the current collector, for example, Al, Ni, Ti, Mo, Ru, Pd, stainless steel or steel can be raised.

The electrode composite of the present invention may be formed by combining materials formed as an electrode and a current collector, respectively, or by forming an electrode directly on a current collector. For direct formation, an electrode active material may be applied to a surface of the current collector using a known method.

(All-solid-state secondary battery)

The present invention provides an all-solid-state secondary battery containing the solid electrolyte composite of the present invention and/or the electrode of the present invention. In the all-solid-state secondary battery, a solid electrolyte layer containing the solid electrolyte composite of the present invention may be combined with a positive electrode and a negative electrode commonly used in this field, a solid electrolyte layer containing the solid electrolyte composite of the present invention may be combined with the electrode of the present invention, or a solid electrolyte layer commonly used in this field may be combined with the electrode of the present invention.

The all-solid-state secondary battery can be obtained, for example, by laminating a positive electrode, a solid electrolyte layer, a negative electrode and a current collector, pressing them to obtain a cell, and then fixing this in a container.

[Embodiment 1]

A method for manufacturing a solid electrolyte material having an $\alpha$-Li$_3$PS$_4$ phase, comprising
heating a Li ion conductive sulfide material containing Li, P and S but free of F and Cl and having no $\alpha$-Li$_3$PS$_4$ phase to a temperature within a range from 230°C to 350°C, wherein a temperature increase rate at 200°C is 100°C/min or more.

[Embodiment 2]

The method according to Embodiment 1, wherein the temperature increase rate at 200°C in the heating is 150°C/min or more.

[Embodiment 3]

The method according to Embodiment 1 or 2, further comprising obtaining the Li ion conductive sulfide material by mechanochemical treatment of starting materials thereof.

[Embodiment 4]

A method for manufacturing a solid electrolyte material having an $\alpha$-Li$_3$PS$_4$ phase, comprising heating a Li ion conductive sulfide material containing Li, P and S as well as F and/or Cl and having no $\alpha$-Li$_3$PS$_4$ phase to a temperature within a range from 200°C to 300°C.

[Embodiment 5]

The method according to Embodiment 4, wherein the solid electrolyte material has a composition represented by the following formula (I):

$$Li_3PS_4 \cdot aLiX \qquad (I)$$

(wherein X is F and/or Cl and a satisfies $0 \le a \le 2.0$).

[Embodiment 6]

The method according to Embodiment 4 or 5, further comprising obtaining the Li ion conductive sulfide material by mechanochemical treatment of a starting material thereof.

[Embodiment 7]

A solid electrolyte material containing Li, P, S and F, having a composition represented by Li$_3$PS$_4$·aLiF (wherein a satisfies $0 < a \le 2.0$) and having an $\alpha$-Li$_3$PS$_4$ phase at room temperature.

[Embodiment 8]

A solid electrolyte material having an $\alpha$-Li$_3$PS$_4$ phase, obtained by the method according to any one of Embodiments 4 to 6.

EXAMPLES

Hereinafter, the present invention is further specifically explained by way of Working Examples and Comparative Examples which do not limit the present invention.
In the following Working Examples and Comparative Examples, Li$_2$S was from Mitsuwa Chemicals Co., Ltd (purity > 99.9%), LiI, LiBr, LiCl and P$_2$S$_5$ were from Sigma-Aldrich, and LiF was from Stella Chemifa.
In the following Working Examples and Comparative Examples, Pulverisette P-7 manufactured by Fritsch was used as a planetary ball mill. A fully automatic multipurpose X-ray diffractometer SmartLab manufactured by Rigaku was used as an X-ray diffractometer. An impedance analyzer (SI-1260) manufactured by Solartron was used to measure ion and electronic conductivities. For a Raman spectrum measurement, LabRAM HR-800, which is a laser Raman spectrometer manufactured by HORIBA, Ltd., was used. A hot plate (PC-420D) manufactured by Cornig was used as a heating device, and a TG-DTA (Thermo plus EVO2 TG-DTA8121) manufactured by Rigaku and a DSC (Thermo plus EVO2 DSCvesta) manufactured by Rigaku were used as thermal analyzers. An X-ray photoelectron spectroscopy (XPS) measurement was performed using a K-Alpha X-ray photoelectron spectroscopy system manufactured by Thermo Fisher Scientific with monochromatized Al-K$\alpha$ (1486.6 eV) X-rays. A measurement area was approximately 400 $\mu m^2$, an Ar$^+$ neutralization gun was used for charge neutralization, and an Ar ion species was used for etching.

As a cooling method, liquid nitrogen or an iron press with a stainless steel plate was used.

Measurement conditions and the like of devices used for evaluation of each sample in Working Examples and Comparative Examples are shown below.

<X-ray diffraction measurement>

Using SmartLab described above as the X-ray diffractometer, structural analysis was performed with CuK$\alpha$ rays (= 1.54056 $\times$ 10$^{-10}$ m) at a tube voltage of 45 kV, a tube current of 200 mA, a scanning angle of $2\theta = 10°$ to 60°, a sampling interval of 0.02° and a scanning speed of 10°min$^{-1}$ (all XRD below were performed under these conditions).

<Calculation of ion conductivity and activation energy>

AC impedance was measured using the impedance analyzer (SI-1260) described above, with polycacel (polycarbonate cell) fabricated as follows.

Dies steel (SKD) and polycarbonate with an inner diameter of 10 mm were used as a current collector and an insulator, respectively. Pellets were prepared by weighing 150 mg of each solid electrolyte material, adding it to the rod, and molding by uniaxial pressing at 360 MPa for 5 minutes using a hydraulic press. The shaft and rod were fixed by screwing them together, placed in a glass container, and sealed with a rubber stopper. A measurement frequency was 0.1 Hz to 1 $\times$ 10$^6$ Hz, an AC amplitude was 10 mV, and an intersection of a semicircle and a real axis of an obtained impedance plot was taken as a resistance R of the sample to obtain an ion conductivity $\sigma$ from the following formula.

$$\sigma = (1/R)\cdot(L/S) \ (1)$$

L: pellet thickness (cm), S: electrode surface area (0.785 cm$^2$)

An activation energy ($E_a$) was calculated from the following formula, assuming that the Arrhenius law is followed from the slope of a graph of a temperature dependence of ion conductivity, which plots the ion conductivity measured and an inverse of an absolute temperature at each temperature.

$$\sigma = A \exp(-E_a/RT) \ (2)$$

[$\sigma$ = ion conductivity (S cm$^{-1}$), A: pre-exponential factor (S cm$^{-1}$), T: measurement temperature (K), $E_a$: activation energy (kJ mol$^{-1}$), R: gas constant (kJ mol$^{-1}$K$^{-1}$)]

<Thermal analysis: TG-DTA>

For thermogravimetric differential thermal analysis (TG-DTA), the TG-DTA (Thermo plus EVO2 TG-DTA8121) manufactured by Rigaku described above was used. Approximately 10 mg of powder sample was placed in a sealed aluminum pan and heated from room temperature to 550°C at a temperature increase rate of 10°C/min under a nitrogen gas flow (flow rate of 100 ml/min) for measurement.

The same device was also used for heat treatment of the sample after mechanochemical treatment to be described below. A temperature increase rate during the heat treatment was 100°C/min.

<Thermal analysis: DSC>

Differential scanning calorimetry (DSC) was performed using the DSC (Thermo plus EVO2 DSCvesta) manufactured by Rigaku described above under a nitrogen gas flow.

The same device was also used for heat treatment of the sample after mechanochemical treatment to be described below. A temperature increase rate during the heat treatment was 150°C/min.

<Measurement of Raman spectrum>

For a Raman spectrum measurement, the laser Raman spectrometer LabRAM HR-800 described above was used.

The powder sample was packed and fixed in an Al pan in argon gas and measured using an airtight sample stand (LIBCell-P11D5, nano photon). A green laser (532 nm) was used as an oscillation line for measurement.

A solid electrolyte material was manufactured by treating a Li ion conductive sulfide material containing Li, P and S but free of F and Cl and having **no** $\alpha$-$Li_3PS_4$ phase under various conditions (hereinafter also referred to as an LPS-based solid electrolyte material), and another solid electrolyte material was manufactured by treating a Li ion conductive sulfide material containing Li, P and S as well as F and/or Cl and having **no** $\alpha$-$Li_3PS_4$ phase under various conditions (hereinafter also referred to as an LPX-X-based solid electrolyte material). Then, their properties were investigated.

First, the synthesized sample of each composition will be described. The synthesis of the halogen-free system ($Li_2S$-$P_2S_5$ system) will be described, followed by the $Li_2S$-$P_2S_5$-LiX system (X is halogen) containing halogen.

[LPS-based solid electrolyte material]

A total of 5 g of $Li_2S$ and $P_2S_5$, which were starting materials, were weighed in a glove box under an argon atmosphere to attain a molar ratio of $Li_2S$:$P_2S_5$ = 75:25. The weighed starting materials were mixed and subjected to mechanochemical treatment in a planetary ball mill to obtain 75 $Li_2S$·25 $P_2S_5$ amorphous. Hereinafter, the halogen-free $Li_2S$-$P_2S_5$ system is also referred to as the LPS system.

Here, the sample obtained by mechanochemical treatment is denoted as milled (the same hereinafter for the LPS-X-based solid electrolyte materials). This 75 $Li_2S$·25 $P_2S_5$ amorphous is denoted as $Li_3PS_4$ (milled). The starting materials used and their compositions (molar ratio) at the time of preparation are shown in Table 1.

Conditions for the mechanochemical treatment were 70 hours at a rotational speed of 210 rpm. A 225 ml pot made of $ZrO_2$ and 450 g of balls with a diameter of 4 mm made of $ZrO_2$ were also used.

75 $Li_2S$:25 $P_2S_5$ amorphous obtained by mechanochemical treatment, that is, $Li_3PS_4$ (milled), is hereinafter referred to as a solid electrolyte sample of Comparative Example 1.

An environment inside the glove box under an argon atmosphere is less than -70°C for moisture value and 10 ppm or less for oxygen concentration (all works performed in the glove box hereinafter are under these conditions).

[Table 1]

| | Composition (molar ratio) | | | | | |
|---|---|---|---|---|---|---|
| | $Li_2S$ | $P_2S_5$ | LiF | LiCl | LiBr | LiI |
| $Li_3PS_4$ | 75 | 25 | 0 | 0 | 0 | 0 |

[LPS-X-based solid electrolyte material: LPS-F system]

A total of 3 g of $Li_2S$, $P_2S_5$ and LiF, which were starting materials, were weighed in a glove box under an argon atmosphere to attain a molar ratio of $Li_2S$:$P_2S_5$:LiF = 75:25:50. The weighed starting materials were mixed and subjected to mechanochemical treatment in a planetary ball mill to obtain $Li_3PS_4$·LiF (milled).

Conditions for the mechanochemical treatment were 20 hours at a rotational speed of 210 rpm. A 225 ml pot made of $ZrO_2$ and 450 g of balls with a diameter of 4 mm made of $ZrO_2$ were also used.

$Li_3PS_4$·LiF (milled) obtained by mechanochemical treatment is hereinafter referred to as a solid electrolyte sample of Comparative Example 6.

[LPS-X-based solid electrolyte material: LPS-F-based solid electrolyte with a modified composition]

In the $Li_2S$-$P_2S_5$-LiF system described above (hereinafter, may be referred to as the LPS-F system), starting materials were weighed to attain molar ratios shown in Table 2 and subjected to mechanochemical treatment to obtain $Li_3PS_4$·0.1LiF (milled) (Comparative Example 12), $Li_3PS_4$·0.2LiF (milled) (Comparative Example 14) and $Li_3PS_4$·0.5LiF (milled) (Comparative Example 16), respectively.

Conditions for the mechanochemical treatment were the same as in Comparative Example 6 described above.

[Table 2]

| | Composition (molar ratio) | | |
|---|---|---|---|
| | $Li_2S$ | $P_2S_5$ | LiF |
| $Li_3PS_4$ | 75 | 25 | 0 |
| $Li_3PS_4 \cdot 0.1LiF$ | 75 | 25 | 5 |
| $Li_3PS_4 \cdot 0.2LiF$ | 75 | 25 | 10 |
| $Li_3PS_4 \cdot 0.5LiF$ | 75 | 25 | 25 |
| $Li_3PS_4$-LiF | 75 | 25 | 50 |

[LPS-X-based solid electrolyte material: LPS-Cl system, LPS-Br system and LPS-I system]

In addition to the LPS-F system described above, a $Li_2S$-$P_2S_5$-LiCl system (hereinafter, may be referred to as the LPS-Cl system), a $Li_2S$-$P_2S_5$-LiBr system (hereinafter, may be referred to as the LPS-Br system) and $Li_2S$-$P_2S_5$-LiI system (hereinafter may be referred to as the LPS-I system), in which halogen elements were changed, were also subjected to mechanochemical treatment in the same manner to obtain each solid electrolyte sample (milled).

A total of 1 g of $Li_2S$, $P_2S_5$ and LiX, which were starting materials, were weighed in a glove box under an argon atmosphere to attain a molar ratio of $Li_2S$:$P_2S_5$:LiX = 75:25:50. The weighed starting materials were mixed and subjected to mechanochemical treatment in a planetary ball mill to obtain $Li_3PS_4 \cdot LiX$ (milled).

Conditions for the mechanochemical treatment were 20 hours at a rotational speed of 510 rpm. A 45 ml pot made of $ZrO_2$ and 90 g of balls with a diameter of 4 mm made of $ZrO_2$ were also used.

The respective solid electrolyte samples obtained by the mechanochemical treatment are set to be $Li_3PS_4 \cdot LiCl$ (milled) (hereinafter referred to as Comparative Example 7), $Li_3PS_4 \cdot LiBr$ (milled) (hereinafter referred to as Comparative Example 8) and $Li_3PS_4 \cdot LiI$ (milled) (hereinafter referred to as Comparative Example 9) (see Table 3 below).

[Table 3]

| | Composition (molar ratio) | | | | | | milled (No heat treatment) | Heat treatment 330°C |
|---|---|---|---|---|---|---|---|---|
| | $Li_2S$ | $P_2S_5$ | LiF | LiCl | LiBr | LiI | | |
| $Li_3PS_4$ | 75 | 25 | 0 | 0 | 0 | 0 | Comparative Example 1 | - |
| $Li_3PS_4$-LiF | 75 | 25 | 50 | 0 | 0 | 0 | Comparative Example 6 | Working Example 19 |
| $Li_3PS_4$-LiCl | 75 | 25 | 0 | 50 | 0 | 0 | Comparative Example 7 | Working Example 20 |
| $Li_3PS_4$-LiBr | 75 | 25 | 0 | 0 | 50 | 0 | Comparative Example 8 | Comparative Example 10 |
| $Li_3PS_4 \cdot LiI$ | 75 | 25 | 0 | 0 | 0 | 50 | Comparative Example 9 | Comparative Example 11 |

[LPS-based solid electrolyte material]

The above-described $Li_3PS_4$ (milled) was heat treated at each temperature to obtain an LPS-based solid electrolyte material.

In performing the heat treatment, the $Li_3PS_4$ (milled) powder was first placed in a tablet molder with a diameter of 4 mm and pressure molded at 360 MPa using a hydraulic uniaxial press to prepare a pellet with a thickness of 1 mm or less.

Two stainless steel metal plates were placed on a hot plate and heated to a predetermined temperature. The pellet was heated by placing the prepared pellet on one metal plate and sandwiching and pressing the pellet with the other metal plate. A heating time was 1 minute. After heating for 1 minute, the pellet was pressed and quenched with stainless steel plates (quenching was performed by so-called iron press).

Here, the sample obtained by heat treatment is denoted as heated (the same hereinafter for the LPS-X-based solid electrolyte materials). A heat treatment temperature may be expressed by ht (abbreviation of heat treatment) with numbers (3 digits).

A temperature increase rate was calculated to be approximately 750°C/min at 200°C, based on the fact that it took 1.83 seconds to increase the temperature from 188°C to 211°C. Calculations of temperature increase rates hereinafter were performed in the same manner, except in cases where the temperature increase rate was fixed.

<Working Example 1>

A heating temperature was adjusted to attain an actually measured temperature of 338°C (a temperature increase rate at 200°C was 750°C/min or more), and the $Li_3PS_4$ (milled) (Comparative Example 1) pellet was heat treated to obtain a sample of Working Example 1.

<Working Examples 2 to 4, Comparative Example 2>

The actually measured temperature was changed as shown in Table 4 (the row of the temperature increase rate of 750°C/min or more), and the $Li_3PS_4$ (milled) (Comparative Example 1) pellet was heat treated. Conditions are the same as in Working Example 1, except that the heat treatment temperature was changed.

<Working Example 5>

The heating temperature was adjusted to attain an actually measured temperature of 336°C, and the $Li_3PS_4$ (milled) (Comparative Example 1) pellet was heat treated to obtain a sample of Working Example 5.

Specifically, the heat treatment was performed on $Li_3PS_4$ (milled) (Comparative Example 1) using a DSC device. The DSC device was set to a temperature increase rate of 150°C/min. The heating was terminated when the actually measured temperature of $Li_3PS_4$ (milled) reached 336°C, and the sample was quenched in liquid nitrogen.

<Working Examples 6 to 11, Comparative Example 3 and Comparative Example 4>

The actually measured temperature was changed as shown in Table 4 (the row of the temperature increase rate of 150°C/min), and $Li_3PS_4$ (milled) (Comparative Example 1) was heat treated. Conditions are the same as in Working Example 5, except that the heat treatment temperature was changed.

<Working Example 12>

The heating temperature was adjusted to attain an actually measured temperature of 330°C, and $Li_3PS_4$ (milled) (Comparative Example 1) was heat treated to obtain a sample of Working Example 12.

Specifically, the heat treatment was performed on $Li_3PS_4$ (milled) (Comparative Example 1) using a TG-DTA device. The TG-DTA device was set to a temperature increase rate of 100°C/min, and the heating was terminated when the actually measured temperature of $Li_3PS_4$ (milled) reached 330°C. After heating, the sample was cooled at a temperature decrease rate of up to 50°C/min using the same TG-DTA device.

<Working Examples 13 to 18, Comparative Example 5>

The actually measured temperature was changed as shown in Table 4 (the row of the temperature increase rate of 100°C/min), and $Li_3PS_4$ (milled) (Comparative Example 1) was heat treated. Conditions are the same as in Working Example 12, except that the heat treatment temperature was changed.

[Table 4]

| Temp. increase rate (°C/min) | Actually measured temperature (°C) | | | | | | | | |
|---|---|---|---|---|---|---|---|---|---|
| 750~ | | Working Example 1 | Working Example 2 | Working Example 3 | Working Example 4 | | | | Compar. Example 2 |
| | | 338 | 301 | 272 | 256 | | | | 196 |
| 150 | Compar. Example 3 | Working Example 5 | Working Example 6 | Working Example 7 | Working Example 8 | Working Example 9 | Working Example 10 | Working Example 11 | Compar. Example 4 |
| | 525 | 336 | 304 | 285 | 276 | 259 | 249 | 232 | 226 |
| 100 | Compar. Example 5 | Working Example 12 | Working Example 13 | Working Example 14 | Working Example 15 | Working Example 16 | Working Example 17 | Working Example 18 | |
| | 380 | 330 | 309 | 287 | 283 | 275 | 266 | 252 | |

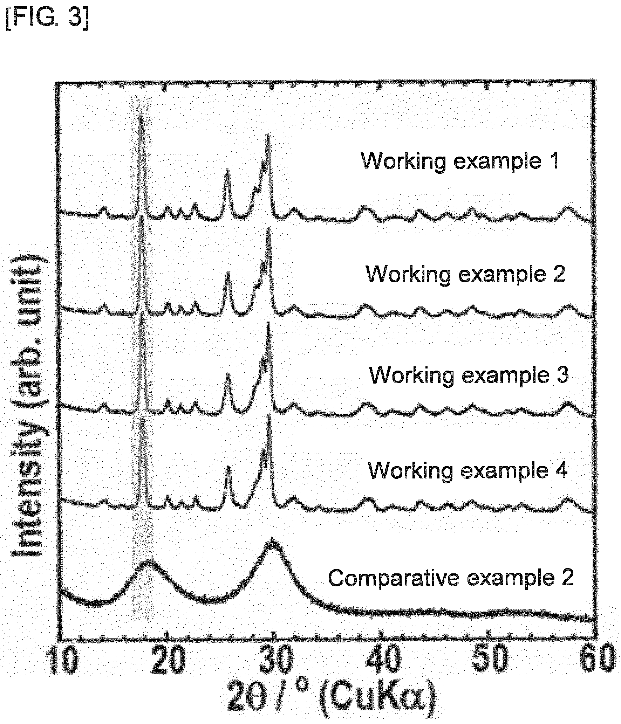

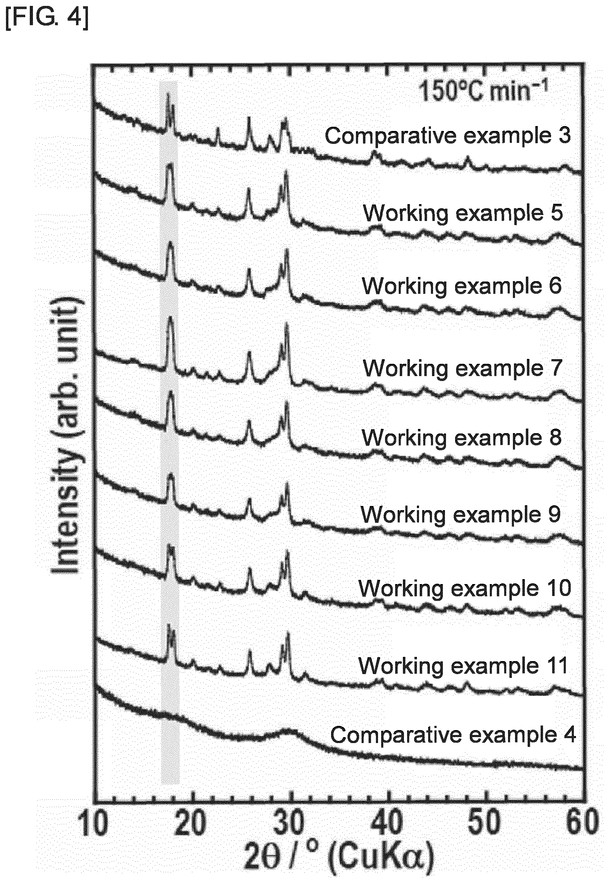

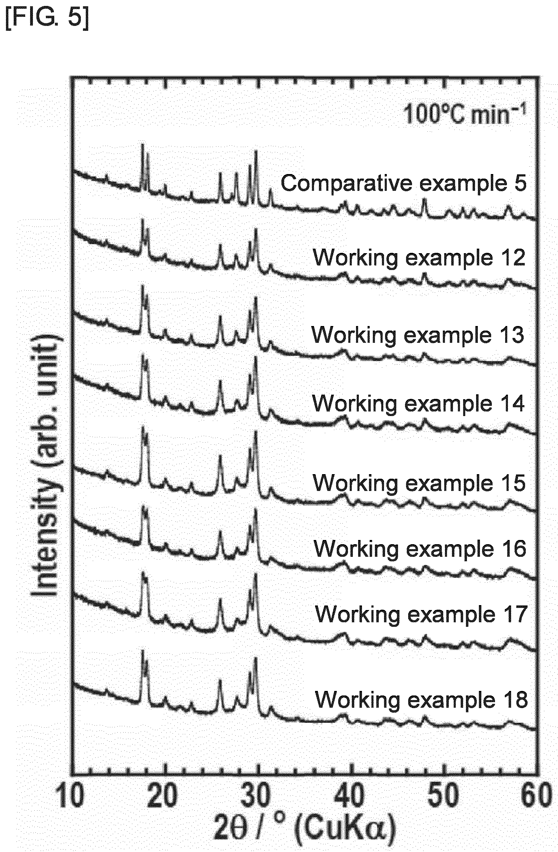

X-ray diffraction (XRD) measurements were performed on the solid electrolyte materials of Working Examples 1 to 18 and Comparative Examples 2 to 5 described above. Results thereof are shown in FIGS. 3 to 5.

Diffraction patterns shown in FIGS. 3 to 5 indicate that peaks peculiar to the $\alpha$-$Li_3PS_4$ phase appear around 18°. Some diffraction lines (peaks) are split. This can be interpreted as indicating that there is indeed an enough $\alpha$ phase to appear in the diffraction lines, rather than a single $\beta$ phase. Since it can be said that crystals with a mixture of $\alpha$ and $\beta$ phases are deposited, it is referred to as an $\alpha$-like phase for convenience.

From these results, it was found that $Li_3PS_4$ having an $\alpha$ phase, which is not stably present at room temperature, could be obtained by heat treatment at temperatures up to 350°C rapidly with the temperature increase rates set at 750°C/min, 150°C/min and 100°C/min. It was also found that $Li_3PS_4$ having an $\alpha$ phase ($\alpha$-$Li_3PS_4$-like phase) could be obtained by rapid heating and rapid cooling (quenching) using liquid nitrogen and the like.

[LPS-based and LPS-X-based (X is halogen) solid electrolyte materials]

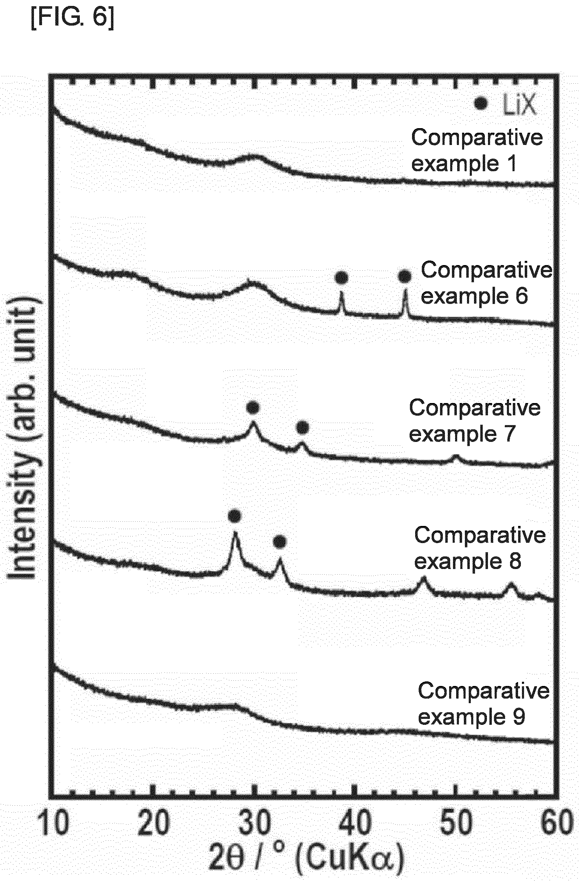

Results of the X-ray diffraction measurements for the samples with only mechanochemical treatment (milled) in the LPS systems and the LPS-X systems (X is halogen), shown in Table 3, are shown in FIG. 6. As shown in FIG. 6, halo patterns were observed indicating that the materials were amorphous, although some starting materials remained.

Heat treatment was performed at 330°C on these samples of Comparative Examples 6 to 9. Heat treatment conditions were the same as in Working Example 1, except that the actually measured temperature was different. Specifically, pellets of $Li_3PS_4$·LiF (milled) (Comparative Example 6), $Li_3PS_4$·LiCl (milled) (Comparative Example 7), $Li_3PS_4$·LiBr (milled) (Comparative Example 8) and $Li_3PS_4$·LiI (milled) (Comparative Example 9) were prepared. A heating temperature was adjusted to attain an actually measured temperature of 330°C (a temperature increase rate at 200°C was 750°C/min or more), and these pellets were heat treated. Samples of $Li_3PS_4$·LiF (ht330) (Working Example 19), $Li_3PS_4$·LiCl (ht330) (Working Example 20), $Li_3PS_4$·LiBr (ht330) (Comparative Example 10) and $Li_3PS_4$·LiI (ht330) (Comparative Example 11) were thus obtained.

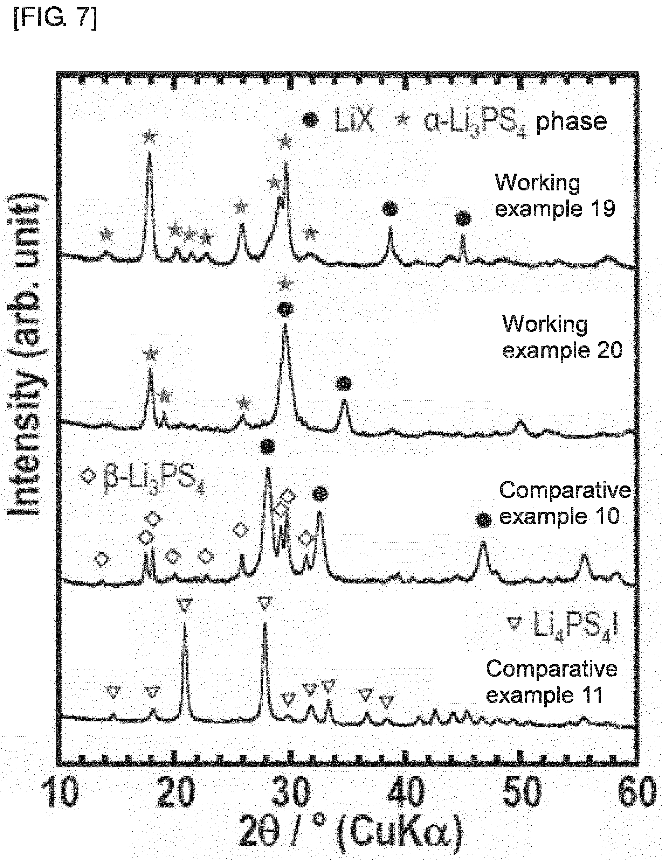

Results of X-ray diffraction measurements for heat-treated Working Examples 19 and 20, and Comparative Examples 10 and 11 are shown in FIG. 7. As shown in FIG. 7, diffraction lines derived from the $\alpha$ phase were observed in Working Example 19 of the LPS-F system containing F (fluorine) as halogen and in Working Example 20 of the LPS-Cl system containing Cl (chlorine). On the other hand, no diffraction lines derived from $\alpha$-$Li_3PS_4$ were observed in Comparative Example 10 of the LPS-Br system containing Br (bromine) and in Comparative Example 11 of the LPS-I system containing I (iodine). In particular, a diffraction line derived from the $\beta$ phase was observed in Comparative Example 10 (LPS-Br system).

Thus, it was found that among the halogens, the $\alpha$ phase or $\alpha$-like phase of $Li_3PS_4$ crystals were deposited in the LPS-F systems and the LPS-Cl systems. On the other hand, it can be seen that the $\alpha$ phase (or $\alpha$-like phase) is not deposited in systems containing Br or I, even for the same halogen elements. In the LPS-F systems and the LPS-Cl systems, there is some contribution by F and Cl to the formation of the $\alpha$ phase, or in other words, to the retention of the $\alpha$ phase, which is originally a high-temperature phase, at room temperature.

[LPS-F-based solid electrolyte material]

$Li_3PS_4$·LiF (milled) (Comparative Example 6) obtained by mechanochemical treatment in compositions shown in Table 5 below was heat treated at various temperatures to obtain samples of Working Example 19 and Working Examples 21 to 24. Heat treatment conditions (including cooling conditions) were the same as in Working Example 1, except that the actually measured temperature was different. Heat treatment temperatures of Working Example 19 and Working Examples 21 to 24 are as shown in Table 6 below.

[Table 5]

|  | Composition (molar ratio) | | | | | |
|---|---|---|---|---|---|---|
|  | $Li_2S$ | $P_2S_5$ | LiF | LiCl | LiBr | LiI |
| $Li_3PS_4$-LiF | 75 | 25 | 50 | 0 | 0 | 0 |

[Table 6]

|  | Working Example 21 | Working Example 22 | Working Example 23 | Working Example 19 | Working Example 24 | Comparative Example 6 |
|---|---|---|---|---|---|---|
| heat treatment (°C) | 280 | 300 | 320 | 330 | 350 | (milled) |

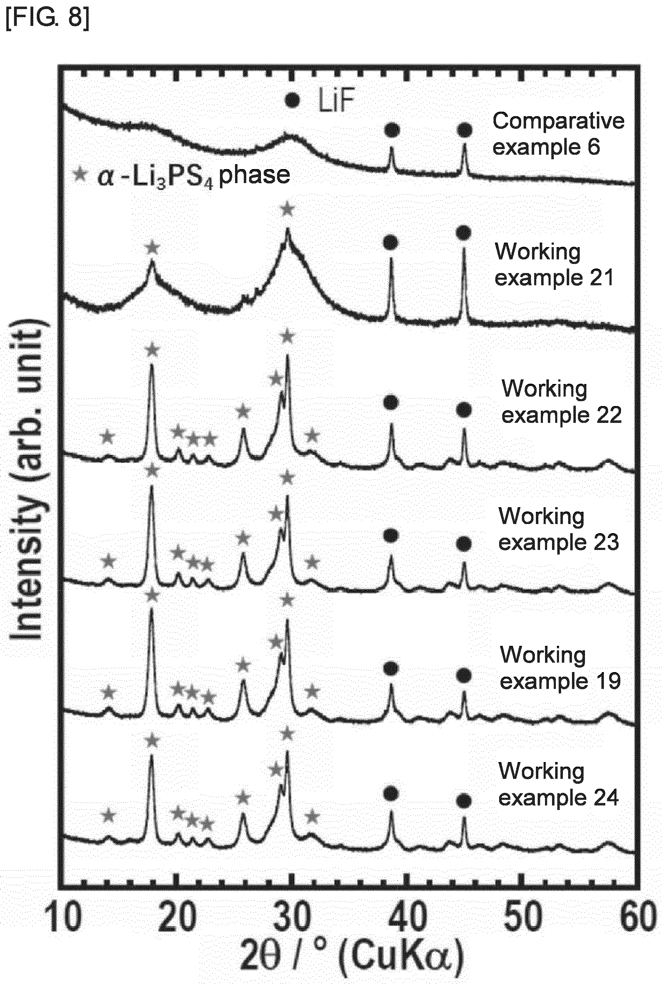

Results of X-ray diffraction measurements for heat-treated Working Examples 19 and 21 to 24 and Comparative Example 6 are shown in FIG. 8.

As shown in FIG. 8, in all of Working Example 19 and Working Examples 21 to 24, diffraction lines peculiar to the $\alpha$ phase were observed around 18° (indicated by stars in the figure). From peak intensities of the diffraction lines, it can be said that the LPS-F system contributes more to the deposition (formation and stabilization at room temperature) of the $\alpha$ phase than the LPS-Cl system described above (see FIG. 7).

[LPS-X-based solid electrolyte material: Each composition of LPS-F system]

Mechanochemical treatment was performed at the molar ratios shown in Table 2 described above, and the obtained $Li_3PS_4 \cdot 0.1LiF$ (milled) (Comparative Example 12), $Li_3PS_4 \cdot 0.2LiF$ (milled) (Comparative Example 14), $Li_3PS_4 \cdot 0.5LiF$ (milled) (Comparative Example 16) and $Li_3PS_4 \cdot LiF$ (milled) (Comparative Example 6) were heat treated at various temperatures.

Actually measured temperatures of the heat treatment are as shown in Table 7. Heat treatment conditions (also including cooling conditions) were the same as in Working Example 1, except that the actually measured temperature was different.

[Table 7]

| Composition (molar ratio) | Actually measured temperature (°C) | | | | | | |
|---|---|---|---|---|---|---|---|
| $Li_3PS_4 \cdot 0.1LiF$ | Working Example 25 | Working Example 26 | Working Example 27 | Working Example 28 | | Compar. Example 13 | Compar. Example 12 |
| | 300 | 276 | 255 | 239 | | 195 | (milled) |
| $Li_3PS_4 \cdot 0.2LiF$ | Working Example 29 | Working Example 30 | Working Example 31 | Working Example 32 | | Compar. Example 15 | Compar. Example 14 |
| | 297 | 275 | 257 | 240 | | 195 | (milled) |
| $Li_3PS_4 \cdot 0.5LiF$ | Working Example 33 | Working Example 34 | Working Example 35 | Working Example 36 | Working Example 37 | Compar. Example 17 | Compar. Example 16 |
| | 299 | 281 | 259 | 247 | 214 | 195 | (milled) |
| $Li_3PS_4 \cdot LiF$ | Working Example 38 | Working Example 39 | Working Example 40 | Working Example 41 | Working Example 42 | Compar. Example 18 | Compar. Example 6 |
| | 298 | 277 | 257 | 227 | 216 | 196 | (milled) |

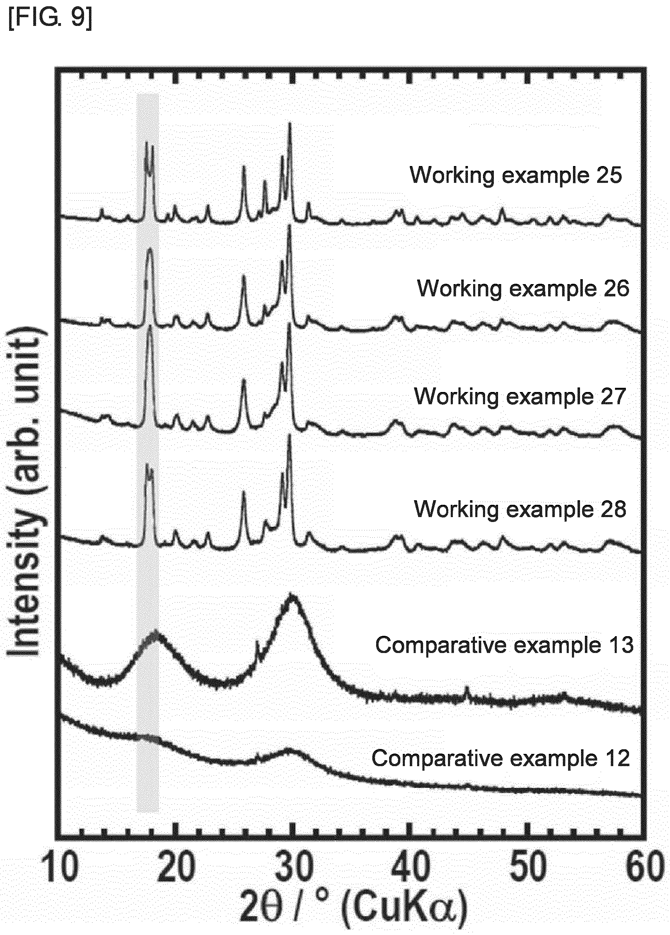

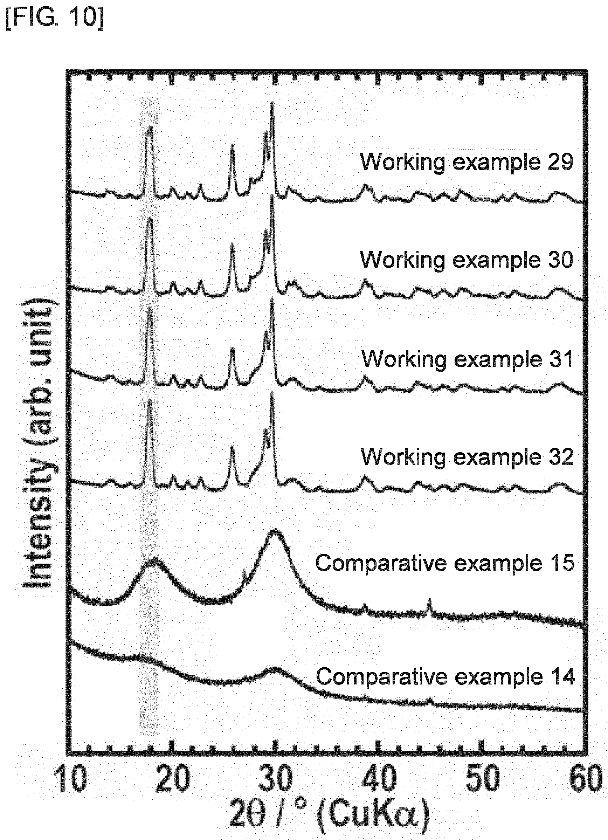

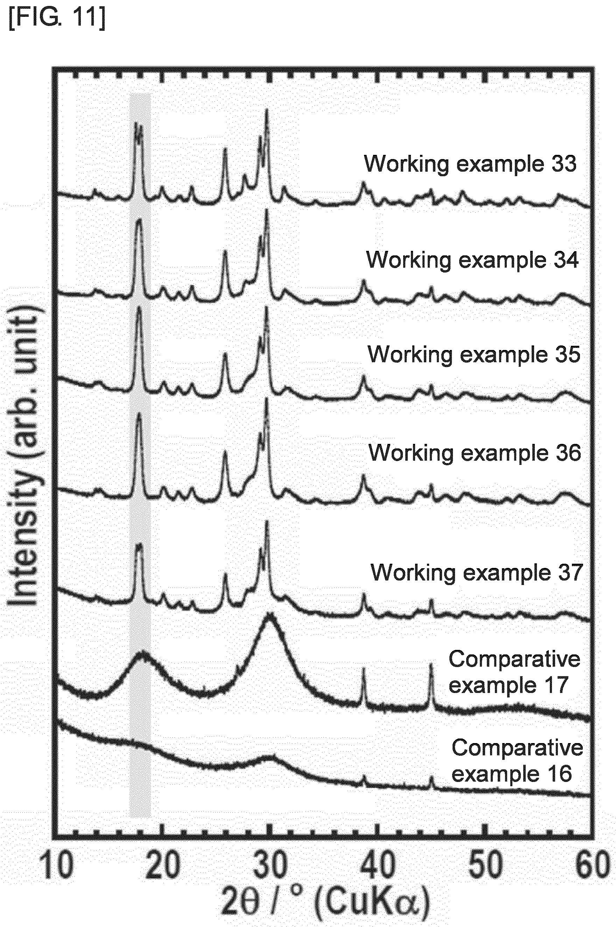

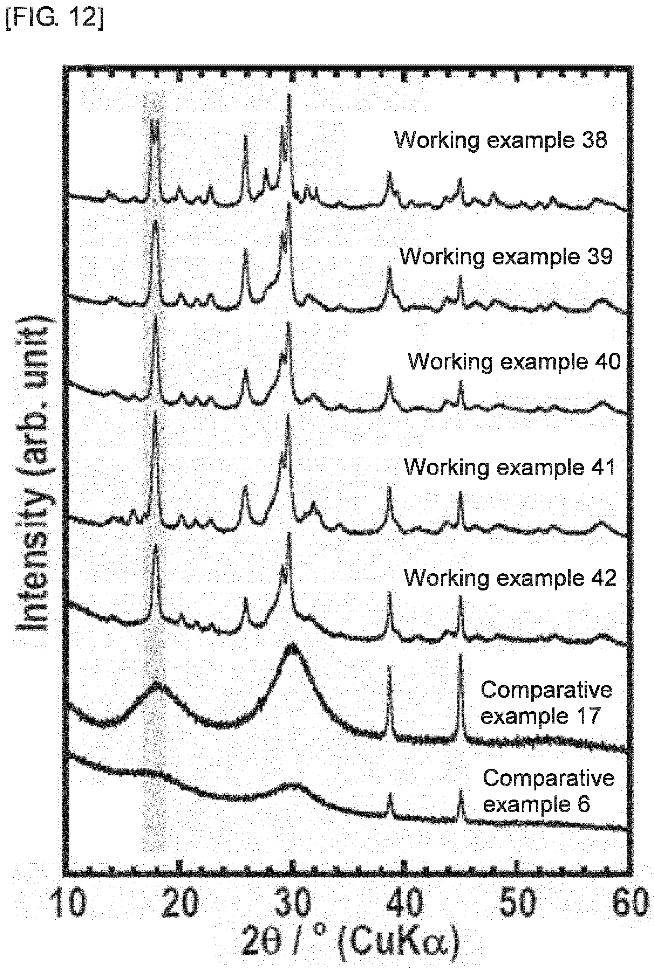

Results of X-ray diffraction measurements on samples of $Li_3PS_4 \cdot 0.1LiF$ from Working Examples 25 to 28 and Comparative Example 13 are shown in FIG. 9, results of X-ray diffraction measurements on samples of $Li_3PS_4 \cdot 0.2LiF$ from Working Examples 29 to 32 and Comparative Examples 14 and 15 are shown in FIG. 10, results of X-ray diffraction measurements on samples of $Li_3PS_4 \cdot 0.5LiF$ from Working Examples 33 to 37 and Comparative Examples 16 and 17 are shown in FIG. 11, and results of X-ray diffraction measurements on samples of Working Examples 38 to 42 and Comparative Examples 6 and 17 are shown in FIG. 12. FIGS. 9 to 12 also show results of X-ray diffraction measurements on $Li_3PS_4 \cdot 0.1LiF$ (milled) (Comparative Example 12), $Li_3PS_4 \cdot 0.2LiF$ (milled) (Comparative Example 14), $Li_3PS_4 \cdot 0.5LiF$ (milled) (Comparative Example 16) and $Li_3PS_4 \cdot LiF$ (milled) (Comparative Example 6).

FIGS. 9-12 show that diffraction lines peculiar to the $\alpha$ phase around 18° are observed in each of the samples of Working Examples 25 to 42. Thus, it was found that the $\alpha$ phase was deposited and its crystal phase was retained at room temperature even in $Li_3PS_4 \cdot LiF$ with high LiF content and $Li_3PS_4 \cdot 0.1LiF$ with low LiF content as the composition (molar ratio). In contrast, as in Comparative Examples 13, 15 and 17, no crystals clearly recognizable as the $\alpha$ phase were deposited at temperatures below 200°C.

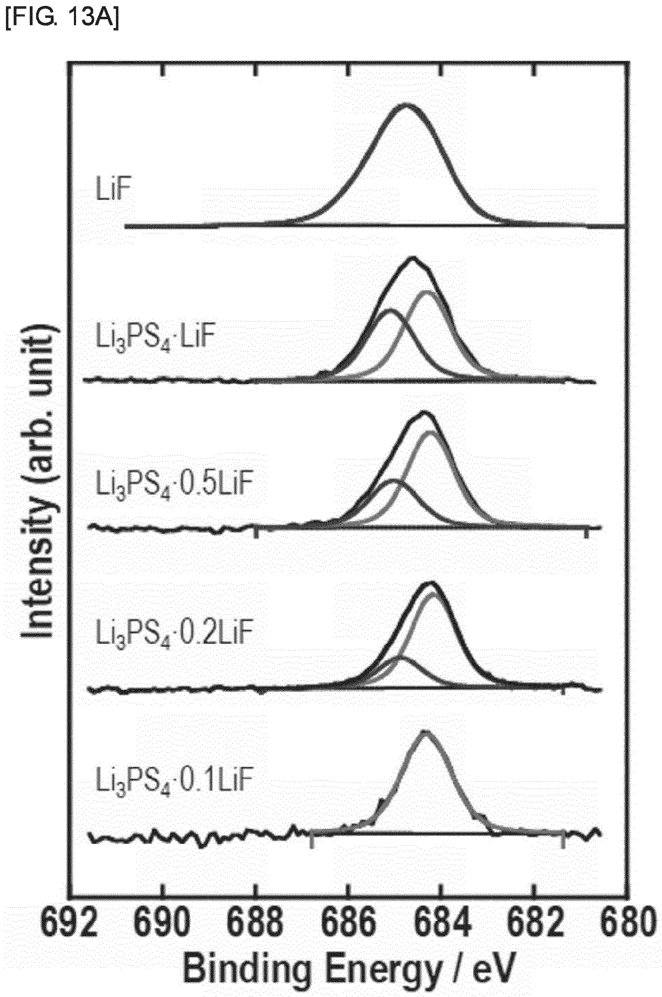

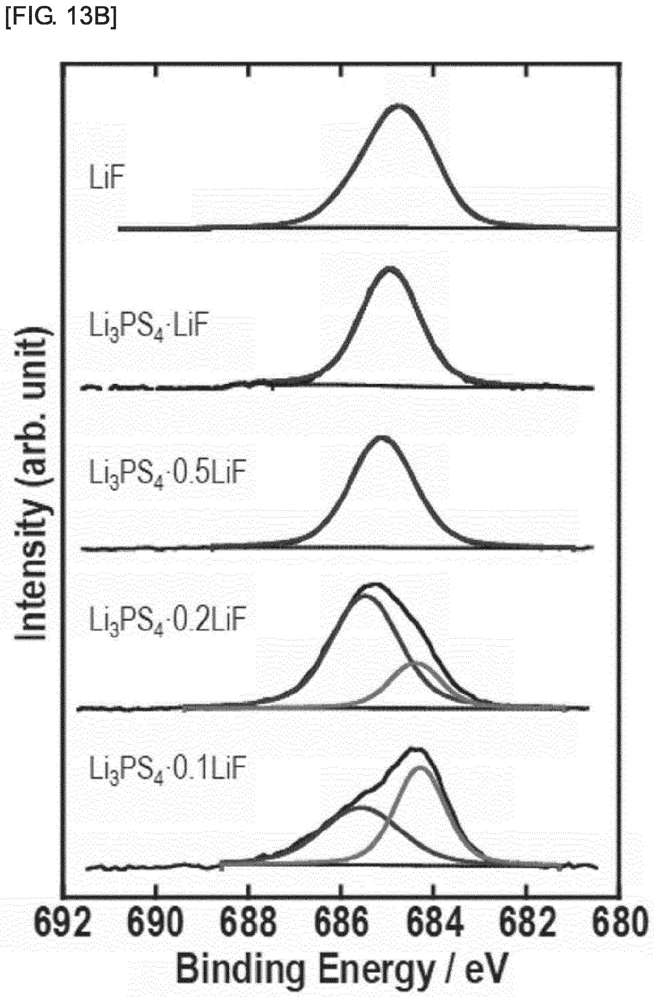

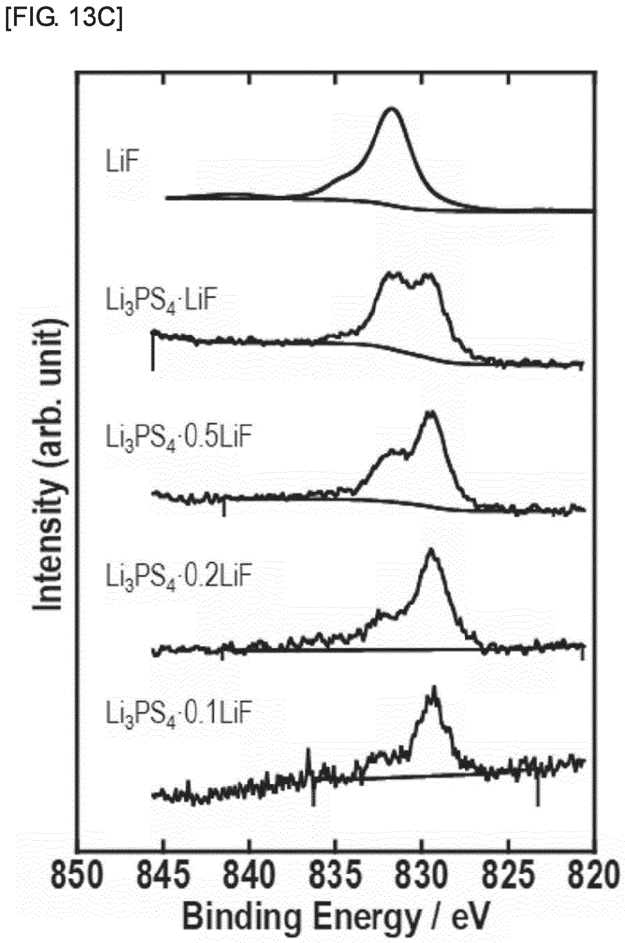

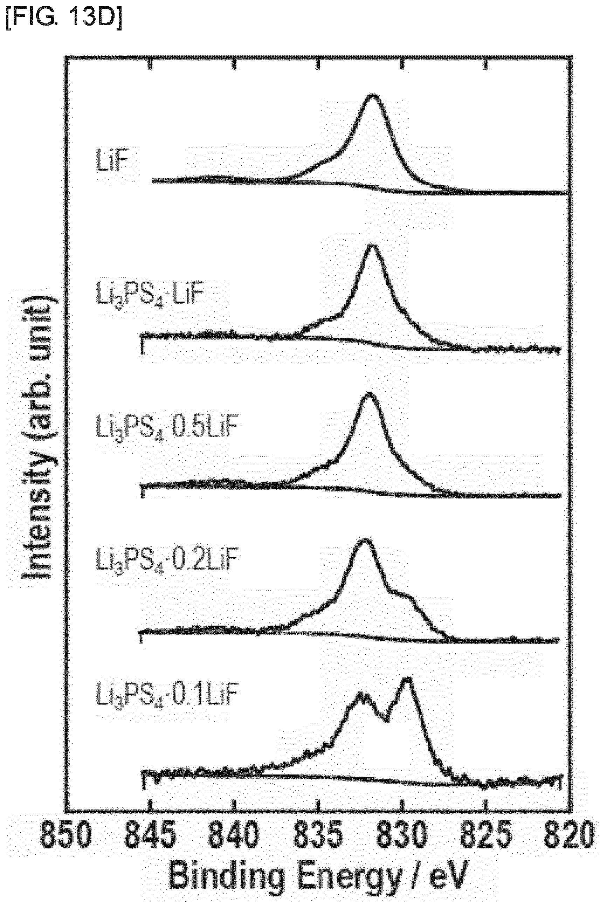

FIGS. 13A to 13D show XPS spectra in the respective compositions of the LPS-F systems. Specifically, FIGS. 13A and 13C are XPS spectra of F1S (FIG. 13A) and FKL1 (FIG. 13C) in the respective compositions after mechanochemical treatment, and FIGS. 13B and 13D are XPS spectra of F1S (FIG. 13B) and FKL1 (FIG. 13D) in the respective compositions after heat treatment.

Note that the spectrum shown at the top of each figure is for only LiF as a measurement target and is represented as a reference for spectral attribution.

From FIGS. 13A to D, it can be seen that in both F1S (FIG. 13A or FIG. 13B) and FKL1 (FIG. 13C or FIG. 13D), the spectra of the samples after heat treatment are different from those of the samples after mechanochemical treatment (that is, no heat treatment is performed).

Focusing on the F1S spectra, LiF-derived peaks around 685eV increase after heat treatment. This can be attributed to deposition of LiF crystals from an amorphous (glass) state. Here, FIG. 13A shows that the LiF-derived peak intensity increases with a sample with a higher amount of LiF in the preparation from 0.1LiF to LiF. Since the state of existence of LiF is not clear, it is described as LiF for convenience, but it can be said that there is an upper limit of LiF dissolution into the glass.

On the other hand, peaks around 684eV, which are not derived from LiF, are also observed, indicating the existence of LiF in a non-crystal state. However, as described above, the state of existence of LiF cannot be clearly defined.

<Calculation of ion conductivity and activation energy>

The ion conductivities ($\sigma$) of solid electrolyte samples of Working Examples 19 and 23, Comparative Example 1 and Comparative Examples 6 to 8 were measured and the activation energies ($E_a$) were calculated.

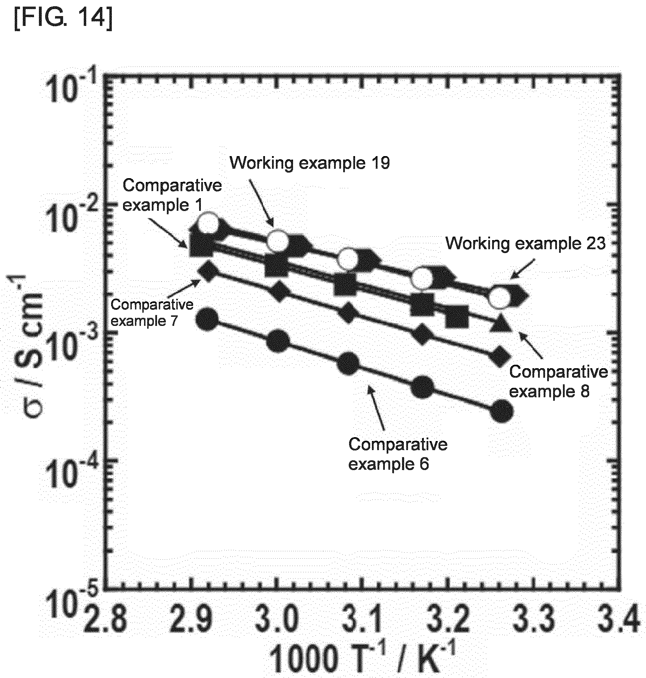

FIG. 14 shows an Arrhenius plot based on the measured ion conductivities. Table 8 below shows the measured ion conductivities and activation energies at room temperature.

[Table 8]

|  | $\sigma_{25}$ (S cm$^{-1}$) | $E_a$ (kJ mol$^{-1}$) |
|---|---|---|
| Working Example 19 | $1.3 \times 10^{-3}$ | 32 |
| Working Example 23 | $1.5 \times 10^{-3}$ | 28 |
| Comparative Example 1 | $7.5 \times 10^{-4}$ | 35 |
| Comparative Example 6 | $1.6 \times 10^{-4}$ | 40 |
| Comparative Example 7 | $4.3 \times 10^{-4}$ | 38 |
| Comparative Example 8 | $8.2 \times 10^{-4}$ | 35 |

From FIG. 14 and Table 8, it can be seen that the solid electrolyte materials of Working Examples 19 and 23 having an $\alpha$-Li$_3$PS$_4$ phase (or a phase similar to the $\alpha$-Li$_3$PS$_4$ phase) have higher ion conductivity than those of the comparative examples having no $\alpha$-Li$_3$PS$_4$ phase. In other words, the high ion conductivity indicates that the $\alpha$ phase exists as a main phase.

<TG-DTA measurement>

Thermogravimetric measurements (TG-DTA) were performed on the respective materials of Comparative Examples 1, 6, 12, 14 and 16 to obtain DTA curves.

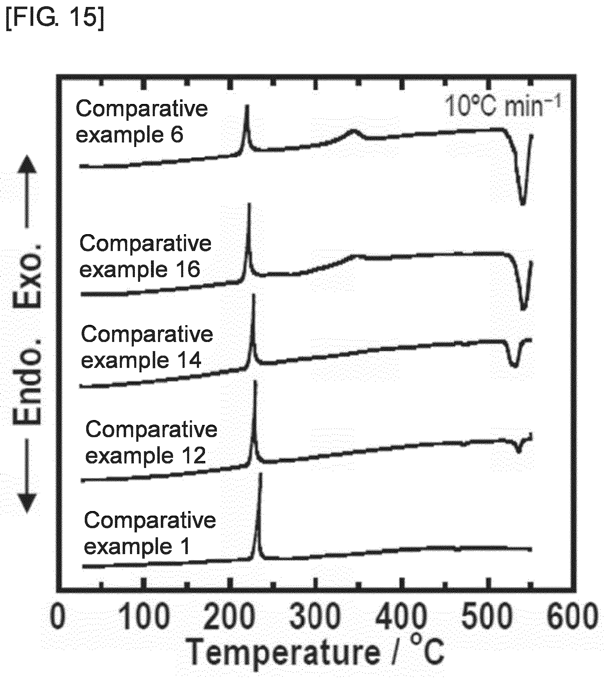

Measurement results are shown in FIG. 15. FIG. 15 shows that an exothermic peak shifts to lower temperatures as the LiF content increases. Referring also to FIGS. 9 to 12, it can be seen that the respective heat treatment temperatures (temperature of crystal deposition, temperature of crystallization) also correspond.

<Calculation of ion conductivity and activation energy>

The ion conductivities ($\sigma$) of the solid electrolyte materials of Working Examples 32, 36 and 41 and Comparative Examples 6, 14 and 16 were measured and the activation energies ($E_a$) were calculated. The measurement method and the like were as described above. Results are shown in Table 9 below.

[Table 9]

|  | $\sigma_{25}$ (S cm$^{-1}$) | $E_a$ (kJ mol$^{-1}$) |
|---|---|---|
| Working Example 32 | $1.2 \times 10^{-3}$ | 29 |
| Working Example 36 | $1.1 \times 10^{-3}$ | 32 |
| Working Example 41 | $1.3 \times 10^{-3}$ | 31 |
| Comparative Example 6 | $1.4 \times 10^{-4}$ | 39 |

(continued)

|  | $\sigma_{25}$ (S cm$^{-1}$) | $E_a$ (kJ mol$^{-1}$) |
|---|---|---|
| Comparative Example 14 | $3.6 \times 10^{-4}$ | 37 |
| Comparative Example 16 | $2.0 \times 10^{-4}$ | 39 |

From Table 9, it can be seen that all the solid electrolyte materials of Working Examples 32, 36 and 41 having an $\alpha$-Li$_3$PS$_4$ phase (or a phase similar to the $\alpha$-Li$_3$PS$_4$ phase) have high ion conductivities of $1.0 \times 10^{-3}$ S cm$^{-1}$ or more. It was found that regardless of the LiF content (composition), the heat treatment resulted in a high ion conductivity, which is considered to be due to the $\alpha$-Li$_3$PS$_4$ phase (or a phase similar to the $\alpha$-Li$_3$PS$_4$ phase).

These results indicate that by manufacturing a solid electrolyte material having an $\alpha$-Li$_3$PS$_4$ phase (or a phase similar to the $\alpha$-Li$_3$PS$_4$ phase) by the manufacturing method as described above, a solid electrolyte that can retain the $\alpha$ phase, which originally exists only at high temperatures, even at room temperature and has an excellent ion conductivity can be obtained.

(Measurement of Raman spectrum)

Raman spectra of the solid electrolyte materials of Working Examples 28, 32, 36 and 41 and Comparative Examples 6, 12, 14 and 16 were measured.

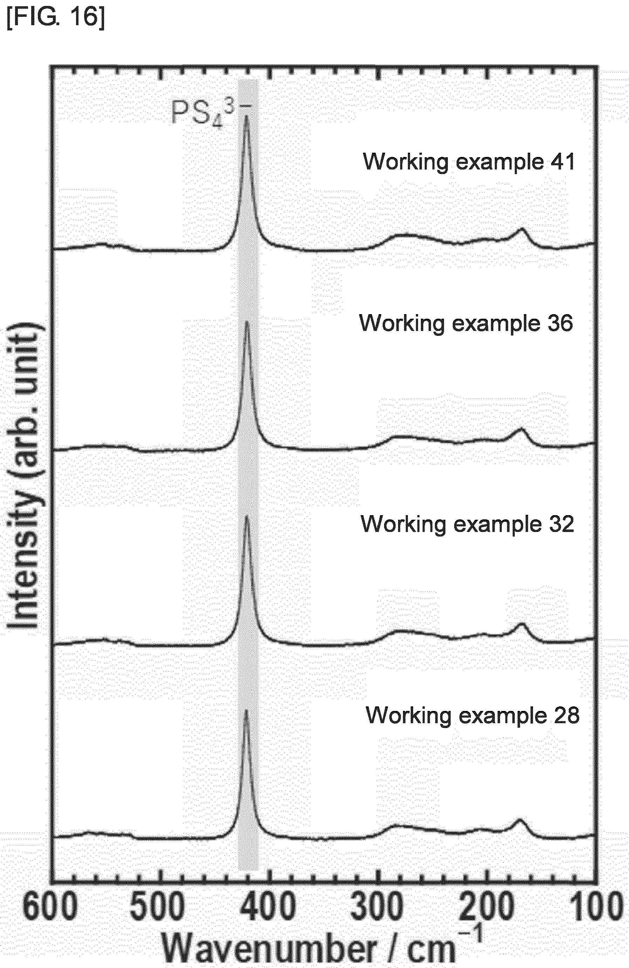

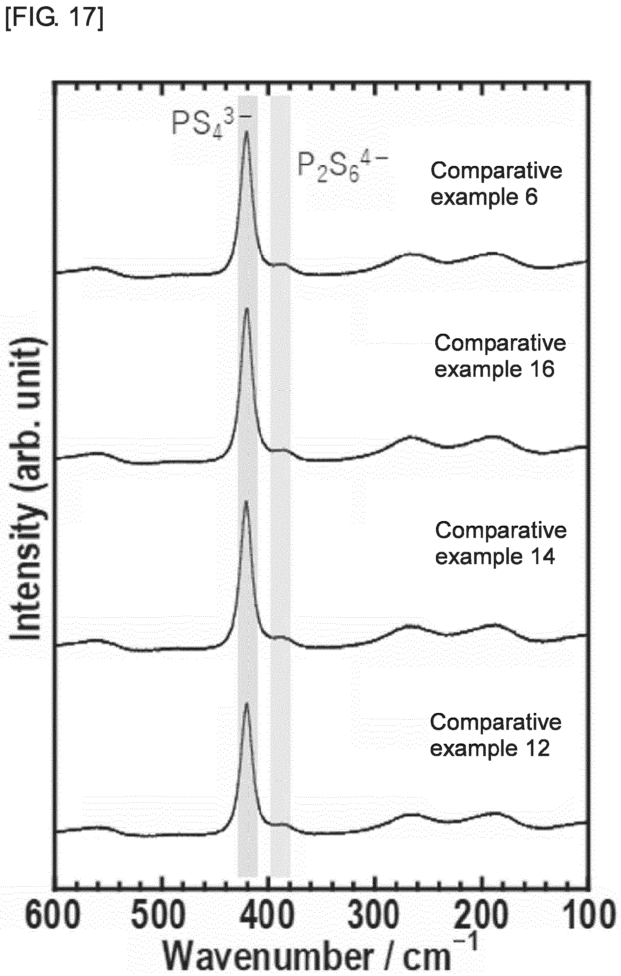

Measurement results are shown in FIGS. 16 and 17. From FIGS. 16 and 17, it can be seen that a peak of P$_2$S$_6$$^{4-}$ is observed in the samples before heating, whereas there is no peak of P$_2$S$_6$$^{4-}$ in the samples after heating. Peaks near 420cm$^{-1}$ are attributed to the PS$_4$$^{3-}$ unit. Thus, it can be seen that Li$_3$PS$_4$ crystals exist in the solid electrolyte materials after heat treatment, that is, in each of the samples of Working Examples.

<Compositions and heat treatment temperature dependence of deposition phases in Li$_3$PS$_4$ and Li$_3$PS$_4$-LiF systems>

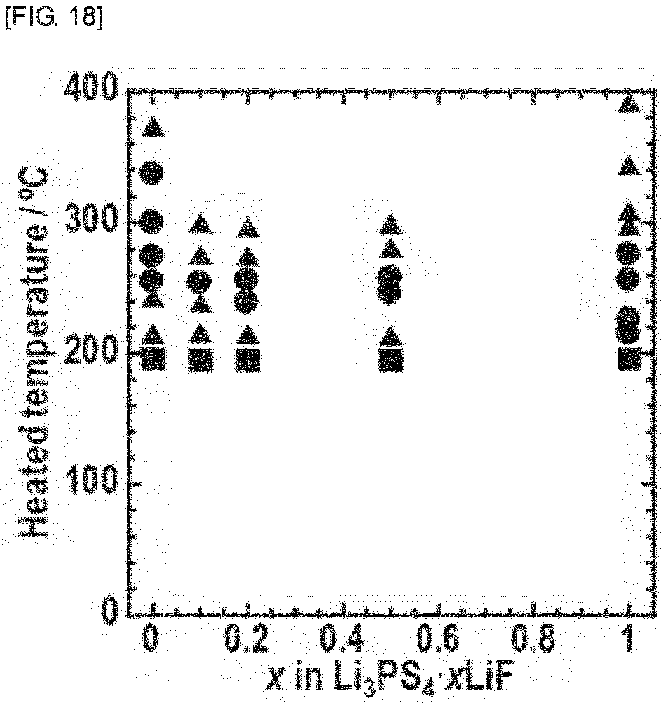

Based on the results of the X-ray diffraction measurements of the respective materials in the Li$_3$PS$_4$ and Li$_3$PS$_4$-LiF systems, the presence or absence of the $\alpha$-Li$_3$PS$_4$ phase (or a phase similar to the $\alpha$-Li$_3$PS$_4$ phase) was evaluated with respect to compositions and heat treatment temperature dependence. Plots thereof are shown in FIG. 18. In the figure, • indicates glass ceramic having an $\alpha$-Li$_3$PS$_4$ phase or a phase similar to the $\alpha$-Li$_3$PS$_4$ phase (may be referred to here as the $\alpha$ phase for convenience), ▲ indicates glass ceramic having a $\beta$-Li$_3$PS$_4$ phase or a phase similar to the $\beta$-Li$_3$PS$_4$ phase, and ■ indicates that the material is amorphous (glass).

From the results of the X-ray diffraction for the respective materials shown in FIG. 18 and FIGS. 3 to 12, it can be seen that LPS-based solid electrolyte materials manufactured by heating the Li ion conductive sulfide materials containing Li, P and S but free of F and Cl and having no $\alpha$-Li$_3$PS$_4$ phase to a temperature within a range from 230°C to 350°C while the temperature increase rate at 200°C was set to be 100°C/min or more have the $\alpha$-Li$_3$PS$_4$ phase, and that LPS-X-based solid electrolyte materials manufactured by heating the Li ion conductive sulfide materials containing Li, P and S as well as F and/or Cl and having no $\alpha$-Li$_3$PS$_4$ phase to a temperature within a range from 200°C to 300°C have the $\alpha$-Li$_3$PS$_4$ phase. This indicates that, by setting appropriate heat treatment conditions for a Li ion conductive sulfide material containing Li, P and S (optionally as well as F and/or Cl), a solid electrolyte material that can maintain the $\alpha$-Li$_3$PS$_4$ phase, which is originally a high-temperature phase, with high ion conductivity at room temperature can be obtained.

In addition, as described above, as compared with the system without F (that is, the LPS system), the system containing F (the LPS-F system) can reliably deposit the $\alpha$ phase even by heat treatment at a low temperature of less than 300°C and can retain the $\alpha$ phase even at room temperature. In the system containing F (the LPS-F system), although its structure is unknown and cannot be identified, it was shown that the existence of LiF in the system allows the deposition of the $\alpha$ phase, regardless of heat treatment conditions such as rapid heating as in the LPS system.

(Storage test of solid electrolyte material)

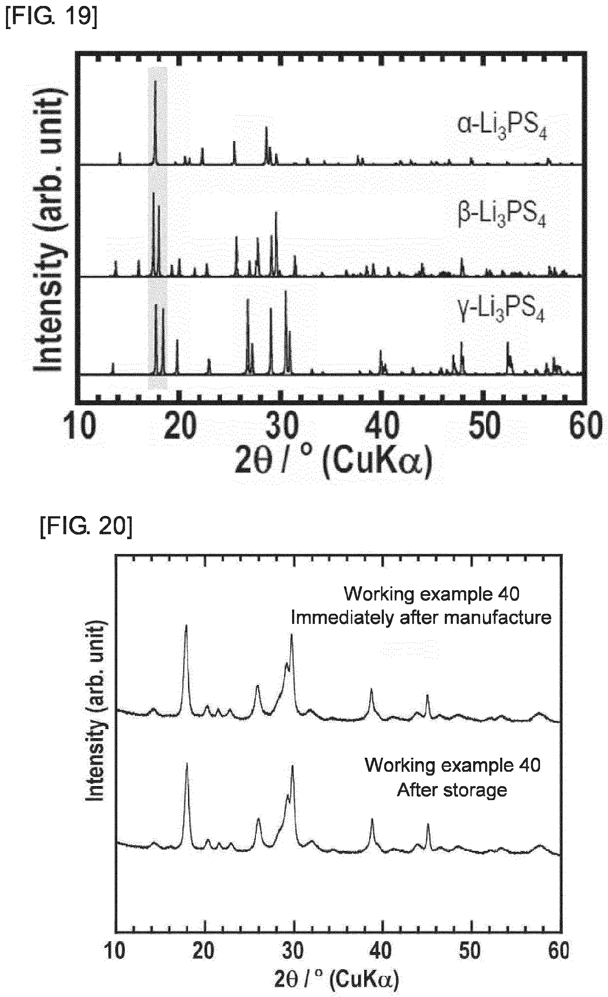

A solid electrolyte material of Working Example 40 was examined for storage stability of an $\alpha$-Li$_3$PS$_4$ phase. An experiment was performed by storing the solid electrolyte material of Working Example 40 in a nitrogen-filled container for 500 hours under a condition of 25°C, followed by an XRD measurement. A result thereof is shown in FIG. 20. FIG. 20 also shows a result of an XRD measurement performed on the solid electrolyte material of Working Example 40 immediately after manufacture as a comparison. FIG. 20 shows that there was no difference in X-ray diffraction pattern between the sample immediately after manufacture and the sample after 500 hours of storage. This indicates that the solid electrolyte material obtained by the manufacturing method of the present invention can retain the $\alpha$-Li$_3$PS$_4$ phase for a long period of time.

(Reference: XRD patterns of crystal polymorphs of $Li_3PS_4$)

As a reference, XRD patterns (using $CuK\alpha$ rays) of crystal polymorphs of $Li_3PS_4$ are shown in FIG. 19. As shown in FIG. 19, $\alpha$-$Li_3PS_4$ has only one unimodal peak appearing around $2\theta = 18°$ in the X-ray diffraction pattern using $CuK\alpha$ rays. In contrast, $\beta$-$Li_3PS_4$ and $\gamma$-$Li_3PS_4$ have two peaks around $2\theta = 18°$. Based on this property, it is possible to determine whether a solid electrolyte material containing $Li_3PS_4$ has an $\alpha$-$Li_3PS_4$ phase by observing peaks around $2\theta = 18°$ in an X-ray diffraction pattern using $CuK\alpha$ rays.

**Claims**

1. A method for manufacturing a solid electrolyte material having an $\alpha$-$Li_3PS_4$ phase, comprising
heating a Li ion conductive sulfide material to a temperature within a range from 230°C to 350°C, the Li ion conductive sulfide material containing Li, P and S but free of F and Cl and having no $\alpha$-$Li_3PS_4$ phase, wherein a temperature increase rate at 200°C is 100°C/min or more.

2. The method according to claim 1, wherein the temperature increase rate at 200°C in the heating is 150°C/min or more.

3. The method according to claim 1 or 2, further comprising obtaining the Li ion conductive sulfide material by mechanochemical treatment of a starting material thereof.

4. A method for manufacturing a solid electrolyte material having an $\alpha$-$Li_3PS_4$ phase, comprising
heating a Li ion conductive sulfide material to a temperature within a range from 200°C to 300°C, the Li ion conductive sulfide material containing Li, P and S as well as F and/or Cl and having no $\alpha$-$Li_3PS_4$ phase.

5. The method according to claim 4, wherein the solid electrolyte material has a composition represented by the following formula (I):

$$Li_3PS_4 \cdot aLiX \qquad (I)$$

(wherein X is F and/or Cl and a satisfies $0 \leq a \leq 2.0$).

6. The method according to claim 4 or 5, further comprising obtaining the Li ion conductive sulfide material by mechanochemical treatment of a starting material thereof.

7. A solid electrolyte material containing Li, P, S and F, having a composition represented by $Li_3PS_4 \cdot aLiF$ (wherein a satisfies $0 < a \leq 2.0$) and having an $\alpha$-$Li_3PS_4$ phase at room temperature.

8. A solid electrolyte material having an $\alpha$-$Li_3PS_4$ phase, obtained by the method according to claim 4 or 5.

[FIG. 1]

Peak intensity

Peak intensity

Bottom peak

Baseline

[FIG. 2]

Melting point (1)

(E)

Glass transition point

Supercooled liquid

Crystallization

(No phase transition)

(B)

(Phase transition)

(D)

High-temperature phase (α phase) (2)

Specific volume

Temperature increase by heating

(A, C)

Medium-temperature phase (β phase) (3)

Low-temperature phase (γ phase) (4)

Temperature

[FIG. 3]

[FIG. 4]

[FIG. 5]

[FIG. 6]

[FIG. 7]

[FIG. 8]

[FIG. 9]

[FIG. 10]

[FIG. 11]

[FIG. 12]

[FIG. 13A]

[FIG. 13B]

[FIG. 13C]

[FIG. 13D]

[FIG. 14]

[FIG. 15]

[FIG. 16]

[FIG. 17]

[FIG. 18]

[FIG. 19]

[FIG. 20]

## INTERNATIONAL SEARCH REPORT

| International application No. |
| --- |
| **PCT/JP2023/039731** |

### A. CLASSIFICATION OF SUBJECT MATTER

***H01B 13/00***(2006.01)i; ***H01B 1/06***(2006.01)i; ***H01B 1/10***(2006.01)i; ***H01M 4/62***(2006.01)i; ***H01M 10/0562***(2010.01)i
FI:   H01B13/00 Z; H01B1/06 A; H01B1/10; H01M10/0562; H01M4/62 Z

According to International Patent Classification (IPC) or to both national classification and IPC

### B. FIELDS SEARCHED

Minimum documentation searched (classification system followed by classification symbols)

H01B13/00; H01B1/06; H01B1/10; H01M4/62; H01M10/0562

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2020-87525 A (SAMSUNG ELECTRONICS CO LTD) 04 June 2020 (2020-06-04) paragraphs [0027]-[0155], fig. 1-6 | 4-6, 8 |
| A | | 1-3, 7 |
| A | WO 2021/065230 A1 (FURUKAWA CO LTD) 08 April 2021 (2021-04-08) entire text | 1-8 |

☐ Further documents are listed in the continuation of Box C.    ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **15 January 2024** | **23 January 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

| Patent document cited in search report | | | Publication date (day/month/year) | Patent family member(s) | | | Publication date (day/month/year) |
|---|---|---|---|---|---|---|---|
| JP | 2020-87525 | A | 04 June 2020 | US | 2020/0161699 | A1 | |
| | | | | paragraphs [0079]-[0275], fig. 1-6 | | | |
| WO | 2021/065230 | A1 | 08 April 2021 | US | 2022/0336853 | A1 | |

Form PCT/ISA/210 (patent family annex) (July 2022)

**REFERENCES CITED IN THE DESCRIPTION**

**Patent documents cited in the description**

- JP 2017095351 A
- JP 2017033770 A
- JP 2018174130 A